(19) Europäisches Patentamt
European Patent Office
Office européen des brevets

(11) EP 3 286 235 B1

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(21) Anmeldenummer: **16717323.6**

(22) Anmeldetag: **13.04.2016**

(51) Int Cl.:
*C08F 265/06* (2006.01)
*C09D 151/00* (2006.01)
*B32B 7/00* (2019.01)
*B32B 27/08* (2006.01)
*B32B 27/30* (2006.01)
*B32B 7/12* (2006.01)
*C08L 51/00* (2006.01)
*C09J 151/00* (2006.01)

(86) Internationale Anmeldenummer:
**PCT/EP2016/058059**

(87) Internationale Veröffentlichungsnummer:
**WO 2016/169819 (27.10.2016 Gazette 2016/43)**

(54) **WÄSSRIGE POLYMERDISPERSIONEN FÜR DIE VERBUNDFOLIENKASCHIERUNG**

AQUEOUS POLYMER DISPERSIONS FOR COMPOSITE FILM LAMINATION

DISPERSIONS AQUEUSES DE POLYMÈRES POUR LE CONTRECOLLAGE DE FILMS COMPOSITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2015 EP 15164771**

(43) Veröffentlichungstag der Anmeldung:
**28.02.2018 Patentblatt 2018/09**

(73) Patentinhaber: **BASF SE**
**67056 Ludwigshafen am Rhein (DE)**

(72) Erfinder:
- **ZORN, Matthias**
**64646 Heppenheim (DE)**
- **SCHUMACHER, Karl-Heinz**
**67433 Neustadt (DE)**

(74) Vertreter: **BASF IP Association**
**BASF SE**
**G-FLP-C006**
**67056 Ludwigshafen (DE)**

(56) Entgegenhaltungen:
**WO-A1-2006/112538**
**WO-A1-2008/102816**
**WO-A1-2011/154920**
**WO-A1-2014/187692**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft wässrige Polymerdispersionen für die Verbundfolienkaschierung enthaltend ein dispergiertes Polymer und ein gelöstes Polymer, sowie ein mehrstufiges Verfahren zur Herstellung des dispergierten Polymers. In einer ersten Stufe wird durch radikalische Emulsionspolymerisation ein erstes Polymerisat hergestellt. In einer zweiten Stufe wird eine wässrige Polymerdispersion in Gegenwart des ersten Polymerisats hergestellt. Die Monomeren der ersten Stufe umfassen Monomere mit Säuregruppen. Das gelöste Polymer umfasst Monomere mit Oxazolingruppen sowie wasserlösliche Monomere. Die wässrigen Polymerdispersionen können als Klebstoff für die Herstellung von Verbundfolien verwendet werden.

Kaschierklebstoffe für die Verbundfolienkaschierung auf Basis von wässrigen Polymerdispersionen benötigen in der Regel einen Vernetzer, um eine Erhöhung der Chemikalienbeständigkeit oder der Wärmebeständigkeit zu erhalten. Häufig werden die Kaschierklebstoffdispersionen hierfür mit Isocyanatvernetzern formuliert. Nachteilig ist, dass diese Formulierungen eine relativ geringe Verarbeitungszeit (sogenannte Topfzeit) aufweisen und gesundheitlich bedenklich sein können. Herkömmliche wässrige Polymerdispersionen benötigen außerdem in der Regel relativ hohe Emulgatormengen zur Stabilisierung der Dispersion. Nachteilig ist, dass hohe Emulgatormengen die Sofortklebrigkeit von wässrigen Kaschierklebstoffformulierungen senken können. Polymermischungen mit nicht-wasserlöslichen, Oxazolingruppen enthaltenden Polymeren werden beschrieben in EP 0176609, US 4474923 und EP 0846731. Diese Polymerdispersionen enthalten relativ hohe Emulgatormengen, was für Anwendungen als Verbundfolienkaschierklebstoffe nachteilig ist. Polymerdispersionen für die Verbundfolienkaschierung ohne Oxazolinmonomere werden beschrieben in der WO 2011/154920. Mehrstufig hergestellte, emulgatorfreie Polymerdispersionen für Schutzfolienanwendungen werden beschrieben in der WO 2014/187692. Wasserlösliche, Oxazolingruppen enthaltende Polymere werden beschrieben in US 5,300,602.

Die Aufgabe bestand darin, wässrige Polymerdispersionen für die Verbundfolienkaschierung zur Verfügung zu stellen, welche eine möglichst lange Topfzeit aufweisen, gesundheitlich möglichst unbedenklich sind und mit denen Verbundfolien mit möglichst guter Chemikalienbeständigkeit, möglichst guter Soforthaftung und möglichst guter Wärmestandfestigkeit herstellbar sind.

Es wurde gefunden, dass die Aufgabe gelöst werden kann durch die nachfolgend beschriebenen Polymerdispersionen. Gegenstand der Erfindung ist eine wässrige Polymerdispersion für die Verbundfolienkaschierung enthaltend

(A) mindestens ein dispergiertes Polymer A, hergestellt durch radikalische Emulsionspolymerisation,

- wobei zunächst in einer ersten Stufe in wässrigem Medium durch radikalische Emulsionspolymerisation ein in Wasser dispergiertes erstes Polymerisat hergestellt wird, wobei das erste Polymerisat hergestellt wird aus einer ersten Zusammensetzung, enthaltend ethylenisch ungesättigte, radikalisch polymerisierbare Monomere, wobei die Monomeren der ersten Stufe mindestens ein Monomer mit mindestens einer Säuregruppe in einer Menge von mindestens 0,1 Gewichtsteilen, bezogen auf 100 Gewichtsteile der Gesamtmenge an Monomeren der ersten und zweiten Stufe, umfassen, und
- anschließend in einer zweiten Stufe eine Polymerdispersion in wässrigem Medium und in Gegenwart des ersten Polymerisats durch radikalische Emulsionspolymerisation einer von der ersten Zusammensetzung verschiedenen zweiten Zusammensetzung, enthaltend ethylenisch ungesättigte, radikalisch polymerisierbare Monomere, hergestellt wird,
- wobei insgesamt weniger als 0,5 Gewichtsteile, bezogen auf 100 Gewichtsteile Monomere des Polymers (A), oder kein Emulgator verwendet werden, und
- wobei die Glasübergangstemperatur des hergestellten Polymerisats (A) kleiner als 0 °C beträgt; und

(B) mindestens ein in der wässrigen Polymerdispersion gelöstes Polymer B, hergestellt durch radikalische Polymerisation von

(b1) mindestens einem ethylenisch ungesättigten, radikalisch polymerisierbaren Monomer mit mindestens einer Oxazolingruppe, und
(b2) mindestens 5 Gew.%, vorzugsweise mindestens 10 Gew.%, bezogen auf die Gesamtmonomermenge des Polymers B, mindestens eines hydrophilen ethylenisch ungesättigten, radikalisch polymerisierbaren Monomer ohne Oxazolingruppe und mit einer Wasserlöslichkeit von mindestens 100 g/l, vorzugsweise mindestens 200 g/l und besonders bevorzugt mindestens 300 g/l bei 25 °C,

und optional weiteren Monomeren (b3).

Vorzugsweise beträgt der Anteil der wasserlöslichen Monomere (b2) im Polymer B weniger als 50 Gew.-%,

bezogen auf die gesamte Menge der Monomere im Polymer B.

Der Ausdruck "wasserlöslich" bezeichnet im Sinne der vorliegenden Erfindung eine Löslichkeit der entsprechenden Substanz in Wasser von mindestens 100 g/l, bevorzugt mindestens 200 g/l und besonders bevorzugt mindestens 300 g/l. Dem Fachmann ist bekannt, dass die Wasserlöslichkeit von Substanzen vom pH-Wert und von der Temperatur abhängt. Die Wasserlöslichkeit im Sinne der vorliegenden Erfindung bezieht sich auf Raumtemperatur (25 °C) und auf die maximal zu erreichende Löslichkeit in Wasser. Der Begriff "wasserlöslich" umfasst insbesondere auch alkalilösliche Lösungen von wasserlöslichen Monomeren mit Säuregruppen, d.h. dass die Monomere im sauren pH-Bereich als Dispersionen vorliegen und sich erst im alkalischen pH-Bereich in Wasser lösen. Insbesondere ist der Begriff "wasserlöslich" so zu verstehen, dass homogene, klare, wässrige Phasen erhalten werden.

Gegenstand der Erfindung ist auch ein entsprechendes Verfahren zur Herstellung wässriger Polymerdispersionen. Das beschriebene Verfahren umfasst die Herstellung von Polyacrylatdispersionen insbesondere für die Anwendung in der Verbundfolienkaschierung durch ein speziell angepasstes, sogenanntes Eintopfverfahren, das auf der Stabilisation von Emulsionspolymerisaten durch "in situ", d.h. unmittelbar vor oder während der Emulsionspolymerisation gebildeten Schutzkolloiden basiert.

Vorzugsweise enthalten das dispergierte Polymer A oder das disperigerte Polymer A und das gelöste Polymer B keine Aminogruppen.

Das molare Verhältnis von Säuregruppen des Polymers A zu Oxazolingruppen des Polymers B beträgt vorzugsweise von 20:1 bis 1:1, besonders bevorzugt von 10:1 bis 2:1.

Das Gewichtsverhältnis von Polymer A zu Polymer B beträgt vorzugsweise von 5:1 bis 50:1 besonders bevorzugt von 10:1 bis 30:1.

Das Prinzip des erfindungsgemäßen Verfahrens beruht auf der vorzugsweise saatgesteuerten Bildung von kleinen Polymerpartikeln in wässriger Dispersion in einer ersten Polymerisationsstufe durch radikalische Polymerisation einer ersten Monomerzusammensetzung, enthaltend mindestens ein ethylenisch ungesättigtes Monomer mit mindestens einer Säuregruppe (z.B. eines Gemisches aus Alkyl(meth)acrylat und (Meth)acrylsäure) sowie anschließender Neutralisation und nachfolgender Zuführung der Hauptmonomere, z.B. eines Gemisches aus Alkyl-(meth)acrylaten, und optional Styrol und weiteren Säuremonomeren. Die in der ersten Stufe gebildeten Partikel können nach Neutralisation in Lösung gehen und als Schutzkolloide die erfindungsgemäße Polymerdispersion stabilisieren. Zu Beginn der Reaktion der ersten Stufe sinkt der pH-Wert im Reaktionsgefäß durch kontinuierliche Säurezugabe stetig ab. Hierdurch bedingt liegen die in der ersten Polymerisationsstufe gebildeten Polymerisatteilchen ungelöst vor. Erst mit Neutralisation vor oder während der zweiten Polymerisationsstufe (z.B. durch Zugabe von Ammoniak) gehen die anfangs gebildeten Polymerisatteilchen in Lösung und stellen in der Folge Schutzkolloide dar, welche in der mit Zugabe der Hauptmonomere einsetzenden Emulsionspolymerisation als dispersionsstabilisierende Schutzkolloide wirken können, da sie vorzugsweise aus unpolaren Alkyl(meth)acrylateinheiten und polaren (Meth)acrylsäureeinheiten zusammengesetzt sind. Vorzugsweise erfolgt die Polymerisation der ersten Stufe bei einem pH-Wert kleiner 5 und vor oder während der Polymerisation der zweiten Stufe werden die Säuregruppen des ersten Polymerisats soweit mit einer flüchtigen Base neutralisiert, dass der pH-Wert der Polymerdispersion am Ende der zweiten Stufe größer 5 beträgt. Eine bevorzugte flüchtige Base ist z.B. Ammoniak, z.B. in Form einer wässrigen Ammoniaklösung.

Gegenstand der Erfindung sind auch die Verwendung der erfindungsgemäßen wässrigen Polymerdispersionen als Kaschierklebstoff, zur Herstellung von Kaschierklebstoffen oder bei der Herstellung von Verbundfolien, entsprechende Verbundfolien sowie ein entsprechendes Verfahren zur Herstellung von Verbundfolien, wobei eine erfindungsgemäße wässrige Polymerdispersion zur Verfügung gestellt wird und mindestens zwei Folien unter Verwendung der wässrigen Polymerdispersion miteinander verklebt werden.

Im Folgenden werden gelegentlich die Bezeichnung "(Meth)acryl..." und ähnliche Bezeichnungen als abkürzende Schreibweise verwendet für "Acryl... oder Methacryl...". In der Bezeichnung Cx-Alkyl(meth)acrylat und analogen Bezeichnungen bedeutet x die Anzahl der C-Atome der Alkylgruppe.

Die Glasübergangstemperatur wird durch Differential Scanning Calorimetrie (ASTM D 3418-08, sogenannte "midpoint temperature") bestimmen. Die Glasübergangstemperatur des Polymerisats der Polymerdispersion ist die bei Auswertung der zweiten Heizkurve (Heizrate 20° C/min) erhaltene Glasübergangstemperatur.

Die angegebenen Löslichkeiten, beispielsweise Wasserlöslichkeiten, werden unter Normalbedingungen, bei einer Temperatur von 25°C und einem Druck von 1013 mbar gemessen. Die Löslichkeiten der Monomeren werden so bestimmt, dass man solange Monomer in deionisiertes Wasser eintropft bis eine visuell sichtbare Phasengrenze entsteht.

Dispergiertes Polymer (A)

Das dispergierte Polymer (A) ist durch radikalische Emulsionspolymerisation von ethylenisch ungesättigten Verbindungen (Monomeren) erhältlich. Die Polymerisation sowohl der ersten als auch der zweiten Stufe erfolgt dabei vorzugsweise emulgatorfrei oder emulgatorarm in dem Sinne, dass kein Emulgator zur Stabilisierung der erfindungsgemäßen Polymerdispersion zugesetzt wird. Emulgatoren sind der Polymerisationsmischung zugesetzte, nicht-polymere, amphiphile, oberflächenaktive Substanzen. Geringe Mengen an Emulgatoren, die z.B. durch die Verwendung von emulgatorstabilisierter Polymersaat bedingt sind, sind dabei unschädlich. Es werden insgesamt weniger als 0,5 Gewichtsteile, insbesondere weniger als 0,4 Gewichtsteile, weniger als 0,3 Gewichtsteile bezogen auf 100 Gewichtsteile Monomere der Polymerdispersion, oder kein Emulgator verwendet. Insbesondere wird vorzugsweise auch kein reaktiver, d.h. copolymerisierbarer Emulgator eingesetzt.

In der ersten Stufe wird ein Polymerisat hergestellt aus Monomeren, welche mindestens ein Monomer mit mindestens einer Säuregruppe in einer Menge von mindestens 0,1 Gew.-Teilen, vorzugsweise von 1 bis 10 Gew.-Teilen bezogen auf 100 Gewichtsteile der Gesamtmenge an Monomeren der ersten und zweiten Stufe, umfassen. Vorzugsweise werden in der ersten Stufe Säuregruppen aufweisende Monomere (Säuremonomere) mit Monomeren ohne Säuregruppen, insbesondere nichtionischen Monomeren, copolymerisiert. Das Gewichtsverhältnis von Säuregruppen aufweisenden Monomeren zu Monomeren ohne Säuregruppen liegt im Monomerengemisch der ersten Polymerisationsstufe vorzugsweise im Bereich von 0,5 : 99,5 bis 30: 70, vorzugsweise von 1 : 99 bis 20 : 80 oder von 5 : 95 bis 15 : 85.

Das Polymerisat der ersten Stufe ist bei niedrigen pH-Werten von z.B. 2 bis 3 und mit nicht neutralisierten Säuregruppen nicht wasserlöslich aber in Wasser dispergiert. Wenn vor der Polymerisation der zweiten Stufe Neutralisationsmittel zugegeben wird, erhöht sich mit steigendem Neutralisationsgrad der Säuregruppen die Wasserlöslichkeit des Polymerisats der ersten Stufe. Mit zunehmender Wasserlöslichkeit kann das Polymerisat der ersten Stufe als Schutzkolloid für das Polymer der zweiten Stufe wirken und die Polymerdispersion mit hohem Polymerfeststoffgehalt stabilisieren. Schutzkolloide sind polymere Verbindungen, die bei Solvatation große Mengen Wasser binden und in der Lage sind, Dispersionen von wasserunlöslichen Polymeren zu stabilisieren. Im Gegensatz zu Emulgatoren erniedrigen sie in der Regel die Grenzflächenspannung zwischen Polymerpartikeln und Wasser nicht. Das zahlenmittlere Molekulargewicht der Schutzkolloide liegt vorzugsweise oberhalb von 1000 g/mol, insbesondere oberhalb von 2000 g/mol und bevorzugt bis zu 50000 g/mol oder bis zu 10000 g/mol, beispielsweise von 1000 bis 100000 g/mol, von 1000 bis 10000 g/mol oder von 2000 bis 10000 g/mol.

Die bei Neutralisation als Schutzkolloide wirksam werdenden Polymerisate der ersten Stufe werden vorzugsweise in einer Menge von 1 bis 60 Gew.-% oder von 5 bis 50 Gew.-%, oder von 7 bis 40 Gew.% oder von 10 bis 30 Gew.-% (insbesondere wenn der Gesamtfeststoffgehalt der erfindungsgemäßen Polymerdispersion mehr als 50 Gew.% beträgt), bezogen auf 100 Gew.-% der zu polymerisierenden Monomeren aller Stufen verwendet.

Die Säuregruppen des Polymerisats der ersten Stufe werden partiell oder vollständig mit geeigneten Basen neutralisiert. Vorzugsweise verwendet man flüchtige Basen, insbesondere flüchtige organische Basen oder Ammoniak. Ammoniak wird vorzugsweise in Form von wässriger Ammoniaklösung eingesetzt. Flüchtige Basen bzw. flüchtige Amine sind vorzugsweise solche mit einem Siedepunkt unter 60°C, vorzugsweise unter 20°C bei Normaldruck.

Monomere mit Säuregruppen (Säuremonomere) werden in einer Menge von mindestens 0,1 Gewichtsteilen und vorzugsweise weniger als 5 Gewichtsteilen auf 100 Gewichtsteile Monomere eingesetzt, z.B. von 0,1 bis 4 Gewichtsteilen. Säuremonomere sind ethylenisch ungesättigte Säuremonomere, beispielsweise ethylenisch ungesättigte Carbonsäuren, und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Bevorzugt sind Itaconsäure, Acrylsäure und Methacrylsäure und deren Gemisch, besonders bevorzugt sind Itaconsäure und Acrylsäure.

Die in der ersten Stufe eingesetzten Säuremonomere können in der ersten Stufe mit Monomeren ohne Säuregruppe copolymerisiert werden. Das Polymerisat der ersten Stufe wird vorzugsweise gebildet aus mindestens 40 Gew.-%, unten näher definierten, nichtionischen Hauptmonomeren sowie aus einer zweiten Monomerart, ausgewählt aus ethylenisch ungesättigten Säuremonomeren. Das Polymerisat der ersten Stufe kann darüber hinaus optional aus weiteren, vorzugsweise nichtionischen Monomeren gebildet sein. Das Polymerisat der ersten Stufe ist vorzugsweise zu mindestens 40 Gew.-%, insbesondere von 40 bis 80 Gew.% oder von 50 bis 80 Gew.% aus Hauptmonomeren aufgebaut, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren. Hauptmonomere für das Polymerisat der ersten Stufe sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als Hauptmonomere für das Polymerisat der ersten Stufe bevorzugt sind die $C_1$- bis $C_{10}$-Alkyl-acrylate und -methacrylate, insbesondere $C_1$- bis $C_8$-Alkylacrylate und -methacrylate.

Ganz besonders bevorzugt ist das Polymerisat der ersten Stufe (abgesehen von den Säuremonomeren) ein sogenanntes Reinacrylat, d.h. es ist abgesehen von den Säuremonomeren ausschließlich aus Derivaten der (Meth)acrylsäure (z.B. deren Estern) gebildet.

In einer bevorzugten Ausführungsform handelt es sich bei dem Polymerisat der ersten Stufe um ein Copolymer, welches

(i) in einer Menge von 5 bis 40 Gew.%, bezogen auf 100 Gew.-Teile der insgesamt in der ersten und zweiten Stufe zu polymerisierenden Monomeren, eingesetzt wird,
(ii) zu mindestens 50 Gew.-% und bis zu 99,9 Gew-% aus Hauptmonomeren aufgebaut ist, welche ausgewählt sind aus der Gruppe bestehend aus C1- bis C10-Alkyl(meth)acrylaten, und Mischungen dieser Monomeren, und
(iii) zu mindestens 0,1 Gew.% und bis zu 15 Gew-% aus ethylenisch ungesättigten Säuremonomeren aufgebaut ist, welche vorzugsweise ausgewählt sind aus Acrylsäure, Methacrylsäure, Itaconsäure und deren Gemisch.

In einer Ausführungsform der Erfindung wird bei der Polymerisation der ersten Stufe mindestens ein Molekulargewichtsregler eingesetzt. Hierdurch kann durch eine Kettenabbruchsreaktion die Molmasse des Emulsionspolymerisats verringert werden. Die Regler werden dabei an das Polymer gebunden, im Allgemeinen an das Kettenende. Die Menge der Regler beträgt insbesondere 0,05 bis 4 Gew.-Teile, besonders bevorzugt 0,05 bis 0,8 Gew.-Teile und ganz besonders bevorzugt 0,1 bis 0,6 Gew.-Teile, bezogen auf 100 Gew.-Teile der zu polymerisierenden Monomeren. Geeignete Regler sind z.B. Verbindungen mit einer Thiolgruppe wie tert.-Butylmercaptan, Thioglycolsäureethylhexylester, Mercaptoethanol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol.

In einer bevorzugten Ausführungsform der Erfindung erfolgt die Polymerisation der ersten Stufe in Gegenwart von Saatlatex. Saatlatex ist eine wässrige Dispersion von feinteiligen Polymerpartikeln mit einem mittleren Teilchendurchmesser von vorzugsweise 20 bis 40 nm. Saatlatex wird eingesetzt in einer Menge von vorzugsweise 0,05 bis 5 Gew.%, besonders bevorzugt von 0,1 bis 3 Gew.%, bezogen auf die Gesamtmonomermenge der ersten und zweiten Stufe. Geeignet ist z.B. ein Latex auf Basis von Polystyrol oder auf Basis von Polymethylmethacrylat. Ein bevorzugter Saatlatex ist Polystyrolsaat.

Bei den für die Polymerisation der zweiten Stufe eingesetzten Monomeren handelt es sich vorzugsweise zu mindestens 60 Gew.-%, bevorzugt zu mindestens 80 Gew.-%, z.B. von 80 bis 99,5 Gew.%, besonders bevorzugt zu mindestens 90 Gew.-% aus einem oder mehreren der nachfolgend beschriebenen Hauptmonomeren. Die Hauptmonomeren sind vorzugsweise ausgewählt aus der Gruppe bestehend aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt.

Als Hauptmonomere für die Polymerisation der zweiten Stufe bevorzugt sind die $C_1$- bis $C_{10}$-Alkylacrylate und -methacrylate, insbesondere $C_1$- bis $C_8$-Alkylacrylate und -methacrylate und Vinylaromaten, insbesondere Styrol und deren Mischungen. Ganz besonders bevorzugt sind Methylacrylat, Methylmethacrylat, Ethylacrylat, n-Butylacrylat, n-Butylmethacrylat, n-Hexylacrylat, Octylacrylat und 2-Ethylhexylacrylat, 2-Propylheptylacrylat sowie Mischungen dieser Monomere.

Neben den Hauptmonomeren können die Monomere für die Polymerisation der zweiten Stufe weitere Monomere umfassen, z.B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z. B. auch Hydroxylgruppen enthaltende Monomere, insbesondere $C_1$-$C_{10}$-Hydroxyalkyl(meth)acrylate sowie (Meth)acrylamid. Als weitere Monomere seien darüber hinaus Phenyloxyethylglykolmono-(meth-)acrylat, Glycidylacrylat, Glycidylmethacrylat, Amino-(meth-)acrylate wie 2-Aminoethyl-(meth)acrylat genannt. Als weitere Monomere seien auch vernetzende Monomere genannt. Vorzugsweise umfassen die in der zweiten Stufe eingesetzten Monomeren

maximal 1 Gewichtsteil oder keine Monomere mit Säuregruppen, z.B. von 0 bis 1 Gewichtsteile oder von 0,05 bis 0,5 Gewichtsteile, bezogen auf die Summe der Monomere der ersten und der zweiten Stufe.

Insbesondere sind die Monomere für die Polymerisation der zweiten Stufe zu mindestens 60 Gew.-%, besonders bevorzugt zu mindestens 80 Gew.-%, z.B. von 60 bis 99,5 Gew.%, und ganz besonders bevorzugt zu mindestens 95 Gew.-% ausgewählt aus mindestens einem $C_1$ bis $C_{20}$ Alkyl(meth)acrylat.

Geeignete Monomere für die erste und/oder die zweite Polymerisationsstufe sind insbesondere auch Behenyl(meth)acrylat, Cyclohexyl(meth)acrylat, 4-Hydroxybutylacrylat, Isobutylacrylat, tert.-Butyl(meth)acrylat, tert.-Butylaminoethylmethacrylat, Ureidomethacrylat und deren Mischungen.

Vorzugsweise handelt es sich bei den Polymerisaten der ersten und zweiten Stufe (abgesehen von den Säuremonomeren) um Reinacrylate, d.h. sie sind abgesehen von den Säuremonomeren (z.B. (Meth)acrylsäure und/oder Itaconsäure) ausschließlich aus Derivaten der (Meth)acrylsäure (z.B. deren Estern) gebildet.

Vorzugsweise sind die Monomere der Polymerisation der zweiten Stufe so ausgewählt, dass die für ein aus den Monomeren der zweiten Stufe hergestelltes Polymer berechnete Glasübergangstemperatur im Bereich von --45 °C bis +15 °C, insbesondere von -40 °C bis +5 °C. liegt. Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2,.... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Encyclopedia of Industrial Chemistry, 5. Aufl., Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989. Für Ethylacrylat wird ein Wert von -13 °C verwendet.

Die tatsächliche Glasübergangstemperatur des dispergierten Polymers der erfindungsgemäßen Polymerdispersion (erste und zweite Stufe) liegt vorzugsweise im Bereich von kleiner 0 °C, z.B. von -40 °C bis kleiner 0 °C. Die tatsächliche Glasübergangstemperatur lässt sich bestimmen durch Differential Scanning Calorimetrie (ASTM D 3418-08, sogenannte "midpoint temperature"). Die Glasübergangstemperatur des Polymerisats der Polymerdispersion ist die bei Auswertung der zweiten Heizkurve (Heizrate 20° C/min) erhaltene Glasübergangstemperatur.

Das Gewichtsverhältnis der Menge der in der ersten Stufe eingesetzten Monomere zur Menge der in der zweiten Stufe eingesetzten Monomere beträgt vorzugsweise von 5:95 bis 50:50 oder von 5:95 bis 40:60, besonders bevorzugt von 10:90 bis 30:70.

Die Herstellung der erfindungsgemäßen Polymerdispersion erfolgt durch Emulsionspolymerisation. Bei der Emulsionspolymerisation werden ethylenisch ungesättigte Verbindungen (Monomere) in Wasser polymerisiert, wobei üblicherweise ionische und/oder nicht -ionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Erfindungsgemäß erfolgt aber sowohl die Polymerisation der ersten Stufe als auch die Polymerisation der zweiten Stufe ganz oder nahezu emulgatorfrei. Zur Stabilisierung der bei der Polymerisation der zweiten Stufe entstehenden Polymerdispersion wird das Polymerisat der ersten Stufe verwendet, welches in situ durch Zugabe von Neutralisationsmittel von einem nicht als Schutzkolloid wirksamen, wasserunlöslichen Polymer in ein als Schutzkolloid wirksames, wasserlösliches Polymer umgewandelt wird.

Vorzugsweise erfolgt die Neutralisation von Säuregruppen des ersten Polymerisats durch Zulauf eines Neutralisationsmittels vor und/oder während (besonders bevorzugt während) der Polymerisation der zweiten Stufe. Nach Zulauf sämtlicher Monomere ist vorzugsweise die zur Neutralisation von mindestens 10%, vorzugsweise 30 bis 100% oder 30 bis 90% Säureäquivalenten benötigte Menge an Neutralisationsmittel in dem Polymerisationsgefäß enthalten.

Die Emulsionspolymerisation der ersten und zweiten Stufe kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B.

Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,5 bis 20 Gew.-%, besonders bevorzugt 1,0 bis 10 Gew.-%, bezogen auf die zu polymerisierenden Monomeren. Es können auch mehrere, verschiedene Initiatoren bei der Emulsionspolymerisation Verwendung finden.

Bei der Polymerisation der zweiten Stufe können die oben genannten Molekulargewichtsregler eingesetzt werden. Vorzugsweise erfolgt die Polymerisation der zweiten Stufe aber ohne Zugabe von weiteren Molekulargewichtsreglern.

Die Emulsionspolymerisation erfolgt in der Regel bei 30 bis 130°C, vorzugsweise bei 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation der ersten Stufe kann sowohl als Batchprozess als auch in Form eines Zulaufverfahrens, einschließlich Stufen- oder Gradientenfahrweise, durchgeführt werden. Bei der Polymerisation wird zur besseren Einstellung der Teilchengröße bevorzugte eine Polymersaat vorgelegt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-%, besonders bevorzugt größer oder gleich 50 Gew.-% erhalten. Für eine hohe Raum/ Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat, durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Das so hergestellte Polymerisat wird vorzugsweise in Form seiner wässrigen Dispersion verwendet. Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 400 nm, insbesondere kleiner 200 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise durch hydrodynamische Chromatographie (HDC) gemessen werden. Bei bi- oder multimodaler Teilchengrößenverteilung kann die Teilchengröße bis zu 1000 nm betragen. Der pH-Wert der Polymerdispersion wird vorzugsweise auf pH größer 5, insbesondere auf einen pH-Wert zwischen 5,5 und 8 eingestellt.

Gelöstes Polymer (B)

Das in der wässrigen Polymerdispersion gelöste Polymer (B) kann durch radikalische Polymerisation, vorzugsweise durch Lösungspolymerisation hergestellt werden aus

(b1) mindestens einem ethylenisch ungesättigten, radikalisch polymerisierbaren Monomer mit mindestens einer Oxazolingruppe, und

(b2) mindestens 5 Gew.%, vorzugsweise mindestens 7 Gew.% oder mindestens 10 Gew.%, bezogen auf die Gesamtmonomermenge des Polymers B, mindestens eines hydrophilen ethylenisch ungesättigten, radikalisch polymerisierbaren Monomer ohne Oxazolingruppe und mit einer Wasserlöslichkeit von mindestens 100 g/l, vorzugsweise mindestens 200 g/l bei 25°C und

(b3) optional weiteren, von den Monomeren (b1) und (b2) verschiedenen Monomeren.

Im Fall von Säuregruppen aufweisenden Monomeren (b2) bezieht sich die Wasserlöslichkeit jeweils auf neutralisierte Säuregruppen.

Die Oxazolingruppen aufweisenden Monomere (b1) werden bevorzugt in einer Menge im Bereich von 10 bis 60 Gewichtsteilen, besonders bevorzugt von 25 bis 50 Gewichtsteilen auf 100 Gewichtsteile der Summe der Monomere des Polymers (B) eingesetzt.

Die hydrophilen Monomere (b2) werden bevorzugt in einer Menge im Bereich von 5 bis 50 Gewichtsteilen, besonders bevorzugt von 7 bis 25 Gewichtsteilen auf 100 Gewichtsteile der Summe der Monomere des Polymers (B) eingesetzt.

Die optionalen Monomere (b3) werden bevorzugt in einer Menge im Bereich von 0 bis 85 Gewichtsteilen, z.B. von 30 bis 85 Gewichtsteilen, besonders bevorzugt von 40 bis 60 Gewichtsteilen auf 100 Gewichtsteile der Summe der Monomere des Polymers (B) eingesetzt.
Geeignete wasserlösliche Polymere aus Oxazolingruppen enthaltenden Monomeren, copolymerisiert mit hydrophilen Monomeren sind z.B. beschrieben in US 5,300,602.

Vorzugsweise werden Oxazolingruppen enthaltende Monomere ausschließlich in dem löslichen Polymer (B) und nicht in dem dispergierten Polymer (A) eingesetzt. Bei den Oxazolingruppen aufweisenden Monomeren handelt es sich um ein monoethylenisch ungesättigtes, hydrophiles Monomer, welches mindestens eine Oxazolingruppe, insbesondere mindestens eine 2-Oxazolingruppe, umfasst (im Folgenden auch Oxazolin-Monomer genannt). Bevorzugt umfasst das Monomer genau eine Oxazolingruppe, insbesondere genau eine 2-Oxazolingruppe.

Bei einem Oxazolin-Monomer handelt es sich um eine organische Verbindung enthaltend mindestens eine ethylenisch ungesättigte Gruppe und mindestens eine Oxazolingruppe. Im Sinne der vorliegenden Erfindung bezeichnet eine Oxazolingruppe eine heterozyklische Verbindung, welche einen fünfgliedrigen Ring umfassend genau ein Sauerstoffatom und genau ein Stickstoffatom umfasst. Insbesondere handelt es sich bei der Oxazolin-Gruppe um eine 2-Oxazolin-Gruppe, welche durch das folgende Strukturelement beschrieben werden kann.

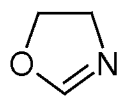

Bevorzugt handelt es sich bei dem Oxazolin-Monomer um eine Verbindung gemäß Formel:

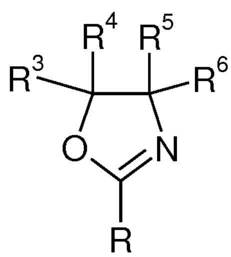

wobei die Reste die folgenden Bedeutungen haben:

R ist ein $C_{2-20}$-Alkenylrest, umfassend mindestens eine ethylenisch ungesättigte Gruppe;
$R^3$, $R^4$, $R^5$, $R^6$ sind unabhängig voneinander ausgewählt aus H, Halogen, $C_{1-20}$-Alkyl, $C_{2-20}$-Alkenyl, $C_{6-20}$-Aryl, $C_{7-32}$-Arylalkyl, $C_{1-20}$-Hydroxyalkyl, $C_{1-20}$-Aminoalkyl und $C_{1-20}$-Haloalkyl, bevorzugt ausgewählt aus H, Halogen und $C_{1-20}$-Alkyl.

Eine ethylenisch ungesättigte Gruppe bezeichnet eine endständige C=C-Doppelbindung. Alkyl bezeichnet einen univalenten Rest bestehend aus einer linearen, verzweigten oder cyclischen Kohlenwasserstoffgruppe, bevorzugt aus einer linearen oder verzweigten Kohlenwasserstoffkette, insbesondere umfassend 1 bis 20 Kohlenstoffatome, bevorzugt 1 bis 18 Kohlenstoffatome, besonders bevorzugt 1 bis 12 Kohlenstoffatome. Beispielsweise kann es sich bei dem Alkylrest um Methyl, Ethyl, n-Propyl oder iso-Propyl handeln.

Alkenyl bezeichnet einen univalenten Rest bestehend aus einer linearen oder verzweigten Kohlenwasserstoffkette, insbesondere umfassend 2 bis 20 Kohlenstoffatome, bevorzugt 2 bis 18 Kohlenstoffatome, besonders bevorzugt 2 bis 12 Kohlenstoffatome, welche eine oder mehrere C-C Doppelbindungen umfasst, wobei die C-C-Doppelbindungen innerhalb der Kohlenwasserstoffkette oder am Ende der Kohlenwasserstoffkette (endständig C=C-Doppelbindung) auftreten können. Beispielsweise kann es sich bei einem Alkenyl-Rest um einen Allyl-Rest handeln.

Aryl bezeichnet eine substituierte oder unsubstituierte aromatische Kohlenwasserstoff-Gruppe, insbesondere umfassend 6 bis 20 Kohlenstoffatome. Beispielsweise kann es sich bei dem Arylrest um eine Phenylgruppe handeln.

Arylalkyl bezeichnet einen univalenten Rest abgeleitet von einem linearen oder verzweigten Alkylrest, insbesondere umfassend 1 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch eine Arylgruppe, wobei die Arylgruppe eine substituierte oder unsubstituierte aromatische Kohlenwasserstoff-Gruppe, insbesondere umfassend 6 bis 14 Kohlenstoffatome, ist. Beispielsweise kann es sich bei der aromatische Kohlenwasserstoff-Gruppe um Phenyl handeln; beispielsweise kann es sich bei dem Arylalkyl-Rest um einen Benzyl-Rest handeln.

Halogen bezeichnet einen Substituenten ausgewählt aus Fluor, Chlor, Brom oder Iod, bevorzugt Chlor.

Haloalkyl bezeichnet einen univalenten Rest abgeleitet von einem linearen oder verzweigten Alkylrest, insbesondere umfassend 2 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch ein Halogenatom (-F, -Cl, -Br, -I, insbesondere Cl). Entsprechendes gilt für die Reste Hydroxyalkyl und Aminoalkyl.

Bevorzugt ist R ein $C_{1-10}$-Alkenylrest, bevorzugt ein $C_{1-6}$-Alkenylrest, umfassend mindestens eine ethylenisch ungesättigte Gruppe. In einer bevorzugten Ausführungsform umfasst der Rest R genau eine ethylenisch ungesättigte Gruppe. Der Rest R ist insbesondere ausgewählt aus Vinyl, Allyl, Isopropenyl (2-Propen-2-yl), 2-Propen-1-yl, 3-Buten-1-yl, oder 4-Buten-1-yl. Insbesondere bevorzugt ist R Vinyl oder Isopropenyl, besonders bevorzugt Isopropenyl.

Bevorzugt sind die Reste $R^3$, $R^4$, $R^5$ und $R^6$ unabhängig voneinander ausgewählt aus H, Halogen, $C_{1-10}$-Alkyl, $C_{6-12}$-Aryl, $C_{7-13}$-Arylalkyl, $C_{1-10}$-Alkoxy, $C_{1-10}$-Hydroxyalkyl, $C_{1-10}$-Aminoalkyl und $C_{1-10}$-Haloalkyl; insbesondere ausgewählt aus H und $C_{1-6}$-Alkyl, besonders bevorzugt aus H, Methyl, Ethyl, n-Propyl, iso-Propyl, n-Butyl, n-Pentyl und n-Hexyl, insbesondere ausgewählt aus H, Methyl und Ethyl. In einer bevorzugten Ausführungsform handelt es sich bei mindestens zwei der Reste $R^3$, $R^4$, $R^5$ und $R^6$ um H. In einer bevorzugten Ausführungsform handelt es sich bei den Resten $R^3$ und $R^4$ um H. In einer bevorzugten Ausführungsform handelt es sich bei allen Resten $R^3$, $R^4$, $R^5$ und $R^6$ um H. In einer bevorzugten Ausführungsform handelt es sich mindestens zwei der Reste $R^3$, $R^4$, $R^5$ und $R^6$ um H.

In einer bevorzugten Ausführungsform sind die Reste $R^3$, $R^4$, $R^5$ und $R^6$ unabhängig voneinander ausgewählt aus H, Methyl und Ethyl und es handelt sich bei mindestens zwei der Reste $R^3$, $R^4$, $R^5$ und $R^6$ um H, bevorzugt handelt es sich bei den Resten $R^3$ und $R^4$ um H.

Insbesondere bevorzugt handelt es sich bei den Oxazolin-Monomeren um mindestens ein Monomer ausgewählt aus der Gruppe bestehend aus 2-Vinyl-2-oxazolin, 2-Vinyl-4-methyl-2-oxazolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-tetramethyl-2-oxazolin, 2-Isopropenyl-2-oxazolin, 2-Isopropenyl-4-methyl-2-oxazolin, 2-Isopropenyl-5-methyl-2-oxazolin, 2-Isopropenyl-4-ethyl-2-oxazolin, 2-Isopropenyl-5-ethyl-2-oxazolin, 2-Isopropenyl-4,4-dimethyl-2-oxazolin, 2-Isopropenyl-5,5-dimethyl-2-oxazolin und 2- Isopropenyl-4,4,5,5-tetramethyl-2-oxazolin. Besonders bevorzugt ist die Verwendung von 2-Vinyl-2-oxazolin und/oder 2-Isopropenyl-2-oxazolin, insbesondere bevorzugt ist 2-Isopropenyl-2-oxazolin (iPOx).

Die hydrophilen, wasserlöslichen Monomer (b2) sind Monomere mit einer Wasserlöslichkeit von mindestens 100 g/l, vorzugsweise mindestens 200 g/l bei 25°C.

Wasserlösliche Monomere (b2) sind z.B. Monomere mit Säuregruppen (Säuremonomere, wobei sich die Wasserlöslichkeit auf deren deprotonierte Form bezieht), Monomere mit Polyalkylenglykolgruppen, sowie polymerisierbare Amide.

Als Säuremonomere können die gleichen Säuremonomere verwendet werden wie oben für die Säuremonomere der ersten Polymerisationsstufe des dispergierten Polymers beschrieben

Monomere mit Polyalkylenglykolgruppen sind z.B. Polyalkylenglykol(meth)acrylate und Alkoxypolyalkylenglykol(meth)acrylate mit vorzugsweise 2, 3 und/oder 4 C-Atomen in der Alkylenglykoleinheit und vorzugsweise 1 bis 4 C-Atomen in der Alkylgruppe und mit vorzugsweise mindestens 3 insbesondere mindestens 5 Alkylenglykoleinheiten, z.B. von 3 bis 70, besonders bevorzugt von 5 bis 15 Alkylenglykoleinheiten. Bevorzugt sind Monomere mit Polyethylenglykolgruppen mit vorzugsweise mindestens 3 insbesondere mindestens 5 Ethylenglykoleinheiten, z.B. von 3 bis 70, besonders bevorzugt von 5 bis 15 Ethylenglykoleinheiten. Geeignete Handelsprodukte sind z.B. Bisomer® MPEG350MA und Bisomer® MPEG550MA.

Weitere wasserlösliche Monomere (b2) sind z.B. monoethylenisch ungesättigte anionische wasserlösliche Monomere, die wenigstens eine anionische Gruppe basierend auf einer Säure mit einem pKs Wert von weniger als 2 aufweisen, insbesondere Monomere mit mindestens einer Sulfonsäuregruppe, insbesondere deren Alkalimetallsalze, z. B. die Natrium- oder Kaliumsalze sowie die Ammoniumsalze. Hierzu zählen die Salze von ethylenisch ungesättigten Sulfon-säuren, insbesondere Vinylsulfonsäure, 2-Acrylamido-2-methylpropansulfon-säure, 2-Acryloxyethansulfonsäure

oder 2-Methacryloxyethansulfonsäure, 3-Acryloxy- oder 3-Methacryloxypropansulfonsäure oder Vinylbenzolsulfonsäure.

Zu den Monomeren (b2) zählen weiterhin monoethylenisch ungesättigte, nichtionische wasserlösliche Monomere. Beispiele hierfür sind die Amide der vorgenannten ethylenisch ungesättigten Carbonsäuren, insbesondere Acrylamid oder Methacrylamid, Hydroxyalkylester der vorgenannten alpha,beta-ethylenisch ungesättigten C3-C8-Monocarbonsäuren oder der alpha,beta-ethylenisch ungesättigten C4-C8-Dicarbonsäuren, insbesondere Hydroxyethylacrylat, Hydroxyethylmethacrylat, 2- oder 3-Hydroxypropylacrylat, 2- oder 3-Hydroxypropylmethacrylat, Ester der vorstehend genannten monoethylenisch ungesättigten Mono- oder Dicarbonsäuren mit C2-C4-Polyalkylenglykolen, insbesondere die Ester dieser Carbonsäuren mit Polyethylenglykol oder Alkyl-Polyethylenglykolen, wobei der (Alkyl)polyethylenglykol-Rest vorzugsweise ein Molekulargewicht im Bereich von 100 bis 3000 g/mol, besonders bevorzugt von 200 bis1000 g/mol oder von 3 bis 70, besonders bevorzugt von 5 bis 15 Ethylenglykoleinheiten aufweist. Zu den Monomeren (b2) zählen weiterhin N-Vinylamide wie N-Vinylformamid, N-Vinylpyrrolidon, N-Vinylimidazol oder N-Vinylcaprolactam.

Zu den Monomeren (b2) zählen weiterhin monoethylenisch ungesättigte kationische wasserlösliche Monomere, die wenigstens eine kationische Gruppe und/oder wenigstens eine im wässrigen protonierbare Gruppe aufweisen. Zu diesen Monomeren zählen insbesondere solche, die eine protonierbare Aminogruppe, eine quartäre Ammoniumgruppe, eine protonierbare Iminogruppe oder eine quaternisierte Iminogruppe aufweisen. Beispiele für Monomere mit einer protonierbaren Iminogruppe sind N-Vinylimidazol oder Vinylpyridine. Beispiele für Monomere mit einer quaternisierten Iminogruppe sind N-Alkylvinylpyridiniumsalze oder N-Alkyl-N'-vinylimidazoliniumsalze wie N-Methyl-N'-vinylimidazoliniumchlorid oder -monosulfat. Unter diesen Monomeren werden insbesondere die Monomere der allgemeinen Formel I bevorzugt

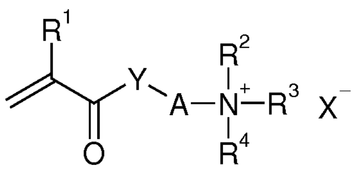

(I)

worin

R1 Wasserstoff oder C1-C4-Alkyl, insbesondere Wasserstoff oder Methyl,
R2, R3 unabhängig voneinander C1-C4-Alkyl, insbesondere Methyl, und
R4 Wasserstoff oder C1-C4-Alkyl, insbesondere Wasserstoff oder Methyl bedeuten,
Y für Sauerstoff, NH oder NR5 mit R5 = C1-C4-Alkyl steht,
A für C2-C8-Alkylen, z. B. 1,2-Ethandiyl, 1,2- oder 1,3-Propandiyl, 1,4-Butandiyl oder 2-Methyl-1,2-propandiyl, das gegebenenfalls durch 1, 2 oder 3 nicht benachbarte Sauerstoffatome unterbrochen ist, steht und
$X^-$ für ein Anionenäquivalent, z. B. für Halogenide wie $Cl^-$, $BF_4^-$, $HSO_4^-$, ½ $SO_4^{2-}$ oder $CH_3OSO_3^-$ steht,
und für R4 = H die freien Basen der Monomere der Formel I.

Beispiele für derartige Monomere sind 2-(N,N-Dimethylamino)ethylacrylat, 2-(N,N-Di-methylamino)ethylacrylat-methochlorid, 2-(N,N-Dimethylamino)ethylmethacrylat, 2-(N,N-Dimethylamino)ethylacrylamid, 3-(N,N-Dimethylamino)propylacrylamid, 3-(N,N-Dimethylamino)propylmethacrylamid, 2-(N,N-Dimethylamino)ethylmeth-acrylamid, 2-(N,N,N-Trimethylammonium)ethylmethacrylat-Chlorid, 2-(N,N,N Tri-methylammonium)ethylmethacrylamid-Chlorid, 3-(N,N,N-Trimethylammonium)propyl-acrylamid-Chlorid, 3-(N,N,N-Trimethylammonium)propylmethacrylamid-Chlorid, 2-(N,N,N-Trimethylammonium)ethylacrylamid-Chlorid, sowie die entsprechenden Monosulfate oder Sulfate. Bevorzugt sind 2-(N,N-Dimethylamino)ethylacrylat, 2-(N,N-Dimethylamino)ethylacrylat-methochlorid, oder 2-(N,N-Dimethylamino)ethyl-methacrylat.

Bevorzugte Monomere (b2) sind die Salze von ethylenisch ungesättigten Sulfonsäuren, Acrylamid, Methacrylamid und die Ester ungesättigter Carbonsäuren mit Polyethylenglykol oder Alkyl-polyethylenglykol. Besonders bevorzugte Monomere (b2) sind Methoxy-polyethylenglykolmethacrylat mit durchschnittlich 8 bis 12 Ethylenglykoleinheiten (z.B. Bisomer MPEG 550 MA, Bisomer MPEG 350 MA von Geo Specialties) und 2-Acrylamido-2-methylpropansulfonsäure-Natriumsalz.

Die weiteren Monomere (b3) werden vorzugsweise in solchen Mengen eingesetzt, die die Löslichkeit des Polymers (B) in der Polymerdispersion nicht wesentlich beeinträchtigen. Monomere (b3) sind z.B. nichtionische, ethylenisch ungesättigte, radikalisch polymerisierbare Monomere ausgewählt aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser

Monomeren. Monomere (b3) sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als Monomere (b3) bevorzugt sind die $C_1$- bis $C_{10}$-Alkylacrylate und -methacrylate, insbesondere $C_1$- bis $C_8$-Alkylacrylate und -methacrylate.

In einer Ausführungsform der Erfindung ist das Polymer B ein Copolymer umfassend (als Bausteine):

(b1) mindestens ein ethylenisch ungesättigtes Monomer, welches mindestens eine Oxazolingruppe umfasst;
(b2) als wasserlösliches Monomer mindestens ein ethylenisch ungesättigtes Monomer (b2), welches mindestens eine Sulfonsäuregruppe ($-SO_3M$) umfasst, wobei M ein Kation bedeutet; und
(b3) als Monomer (b3) mindestens ein Monomer ausgewählt aus der Gruppe bestehend aus $C_{1-20}$-Alkyl(meth)acrylaten und $C_{8-20}$-Vinylaromaten; und optional mindestens ein weiteres Monomer;

wobei der Anteil der Monomere (b1) und (b2) in der Summe vorzugsweise weniger als 50 Gew.-%, bezogen auf die gesamte M enge der Monomere im Polymer B, beträgt. Vorzugsweise beträgt im erfindungsgemäßen Polymer B der Anteil der Monomere (b1) und (b2) in der Summe 2 bis 49,9 Gew.-%, bevorzugt 10 bis 49,5 Gew.-%, insbesondere bevorzugt 25 bis 49 Gew.-%, besonders bevorzugt 30 bis 45 Gew.-%, bezogen auf die gesamte Menge der Monomere im Polymer B.

Vorzugsweise liegt das Gewichtsverhältnis Monomere (b2) zu Monomer (b1) im Bereich von 0,1 bis 1, bevorzugt von 0,25 bis 0,9; insbesondere von 0,3 bis 0,75, besonders bevorzugt im Bereich von 0,3 bis 0,5.

In einer Ausführungsform enthält das erfindungsgemäße Polymer B als wasserlösliches Monomer (b2) ausschließlich ein ethylenisch ungesättigtes Monomer, welches mindestens eine Sulfonsäuregruppe umfasst und wobei die Summe der Monomere (b1) und (b2) weniger als 50 Gew.-%, bevorzugt 2 bis 49,9 Gew.-%, bevorzugt 10 bis 49,5 Gew.-%, insbesondere bevorzugt 25 bis 49 Gew.-%, besonders bevorzugt 30 bis 45 Gew.-%, bezogen auf die gesamte Menge der Monomere im Polymer B, beträgt.

Das Polymer B kann z.B. als Monomer (b3) 50 bis 98 Gew.%, bezogen auf die gesamte Menge der Monomere im Polymer B, mindestens ein Monomer ausgewählt aus der Gruppe bestehend aus $C_{1-8}$-Alkyl(meth)acrylaten umfassen.

Insbesondere stellt das Monomer (b3) ein monoethylenisch ungesättigtes, hydrophobes Monomer dar, welches insbesondere nicht wasserlöslich ist, d.h. die oben definierte Wasserlöslichkeit nicht aufweist. Insbesondere weist das Monomer (b3) eine Wasserlöslichkeit kleiner 100 g/l, besonders bevorzugt kleiner 25 g/l auf.

Typischerweise kann das mindestens eine Monomer (b3) ausgewählt werden aus der Gruppe bestehend aus: Methyl(meth)acrylat, Ethyl(meth)acrylat, n-Butyl(meth)acrylat, Isobutyl(meth)acrylat, tert.-Butyl-(meth)acrylat, sec-Butyl(meth)acrylat, 2-Ethylhexyl(meth)acrylat, Tridecyl-(meth)acrylat, Cyclohexyl(meth)acrylat, n-Octyl(meth)acrylat, n-Lauryl(meth)acrylat, Benzyl-(meth)acrylat, Styrol, alpha-Methylstyrol und Vinyltoluol.

In einer bevorzugten Ausführungsform handelt es sich bei dem Monomer (b3) um ein oder mehrere $C_{1-20}$-Alkyl(meth)acrylate, bevorzugt um ein oder mehrere $C_{1-12}$-Alkyl(meth)acrylate, besonders bevorzugt um ein oder mehrere $C_{1-8}$-Alkyl(meth)acrylate. Besonders bevorzugt handelt es sich bei Monomer (b3) um mindestens ein Monomer ausgewählt aus Methylacrylat (MA), Methyl-methacrylat (MMA), Ethylacrylat (EA), Ethylmethacrylat (EMA), n-Butylacrylat, n-Butylmethacrylat, t-Butylacrylat, t-Butylmethacrylat, 2-Ethylhexylacrylat und 2-Ethylhexyl-methacrylat bevorzugt ausgewählt aus Methylacrylat, Methylmethacrylat, n-Butylacrylat und n-Butylmethacrylat. Besonders bevorzugt handelt es sich bei dem Monomer (b3) um Methylacrylat und/oder Methylmethacrylat. Besonders bevorzugt handelt es sich bei dem Monomer (b3) um n-Butylacrylat und/oder n-Butylmethacrylat. Besonders bevorzugt handelt es sich bei dem Monomer (b3) um eine Mischung aus n-Butylacrylat und Methylmethacrylat.

Bevorzugt umfasst das erfindungsgemäße Polymer B als Monomer (b3) 30 bis 85 Gew.-%, bevorzugt 40 bis 60 Gew.-%, bezogen auf die gesamte Menge der Monomere im Polymer B, mindestens ein Monomer ausgewählt aus der Gruppe bestehend aus $C_{1-8}$-Alkyl(meth)acrylaten, bevorzugt bestehend aus Methylacrylat (MA), Methylmethacrylat (MMA), Ethylacrylat (EA), Ethylmethacrylat (EMA), n-Butylacrylat und n-Butylmethacrylat, besonders bevorzugt bestehend aus Methylacrylat, Methylmethacrylat, n-Butylacrylat und n-Butylmethacrylat.

Das Polymer B kann z.B. als Monomer (b2) 5 bis 50 Gew.%, bezogen auf die gesamte Menge der Monomere im Polymer B, mindestens eine Verbindung der folgenden Formel umfassen:

$$H_2C{=}C(R^1)C({=}O)\text{-}NH\text{-}Z\text{-}SO_3M$$

wobei die Reste und Indices die folgenden Bedeutungen haben:
$R^1$ ist H oder Methyl; Z ist eine zweiwertige verknüpfende Gruppe ausgewählt aus einer Bindung, $C_{1-10}$-Alkylen, Phenylen und $C_{1-10}$-Alkylphenylen (bevorzugt $C_{1-10}$-Alkylen); und M ist ein oder mehrere Metalle, insbesondere ausgewählt aus Alkali- und/oder Erdalkalimetallsalzen, bevorzugt ausgewählt aus Natrium (Na), Kalium (K), Magnesium (Mg) und Calcium (Ca).
Bevorzugt ist Z eine Gruppe $-(CH_2)_n-$ mit n gleich 1 bis 12; $-CH(CH_3)-CH_2-$; $-CH(CH_3)-CH_2-CH_2-$; $-C(CH_3)_2-CH_2-$; $-C(CH_3)_2-CH_2-CH_2-$; $-C(CH_3)_2-CH_2-C(CH_3)_2)-CH_2-$ oder $-C(CH_3)_2-CH_2-CH_2-C(CH_3)_2)-CH_2-$.
Bevorzugt handelt es sich bei dem Monomer (b2) um mindestens ein Monomer ausgewählt aus der Gruppe bestehend aus Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure, 2-Acrylamido-2,4,4-trimethylpentansulfonsäure, Vinylphosphonsäure, Allylphosphonsäure, N-(Meth)acrylamidoalkylphosphonsäuren und (Meth)acryloyloxyalkylphosphonsäuren. Besonders bevorzugt handelt es sich bei dem Monomer (b2) um mindestens ein Monomer ausgewählt aus der Gruppe bestehend aus Vinylsulfonsäure, Allylsulfonsäure, 2-Acrylamido-2-methylpropansulfonsäure (AMPS), 2-Methacrylamido-2-methylpropansulfonsäure, 2-Acrylamidobutansulfonsäure, 3-Acrylamido-3-methyl-butansulfonsäure und 2-Acrylamido-2,4,4-trimethylpentansulfonsäure.

Die genannten Säuren (Monomer (b2)) schließen immer auch die entsprechenden Salze, insbesondere Ammonium, Alkali-und/oder Erdalkalimetallsalze, ein. Bevorzugt handelt es sich bei den oben genannten Monomeren (b2) um die entsprechenden Ammonium- und/oder Metallsalze, bevorzugt um die entsprechenden Alkali- und/oder Erdalkalimetallsalze, besonders bevorzugt um Natrium- und/oder Kaliumsalze. Insbesondere bevorzugt handelt es sich bei dem Monomer (b2) um 2-Acrylamido-2-propansulfonsäure (AMPS) bzw. deren Salze, insbesondere um 2-Acrylamido-2-propansulfonsäure Natriumsalz (AMPS-Na) oder Monomer-Mischungen bestehend aus mindestens 50 Gew.-% AMPS bzw. deren Salze und mindestens einem weiteren Monomer (b2).

Unter Polymer umfassend die oben genannten Monomere versteht der Fachmann im Sinne der vorliegenden Erfindung, dass das entsprechende Polymer aus den genannten Monomeren hergestellt wurde, insbesondere durch radikalische Polymerisation der genannten Monomere. Die erfindungsgemäßen Polymere enthalten somit die Monomer-Einheiten bzw. sind aus diesen aufgebaut, welche den eingesetzten Monomeren entsprechen. Der Fachmann weiß, dass das Polymer zudem, je nach Art der Herstellung, Anfangs- und/oder Endgruppen (z.B. Radikal-Startergruppen) und/oder Reste von Additiven, z.B. von Tensiden und/oder Radikalstarter, aufweisen kann.

In einer bevorzugten Ausführungsform besteht das erfindungsgemäße Polymer B aus den genannten Monomeren (b1), (b2) und (b3), d.h. es wurde durch Polymerisation ausschließlich der genannten Monomere hergestellt.

In einer besonders bevorzugten Ausführungsform betrifft die Erfindung ein Polymer B umfassend:

10 bis 60 Gew.-%, bevorzugt 25 bis 50 Gew.-% des mindestens einen Monomers (b1), wobei es sich bei Monomer (b1) um mindestens ein Monomer handelt ausgewählt aus 2-Vinyl-2-oxazolin, 2-Vinyl-4-methyl-2-oxazolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-tetramethyl-2-oxazolin, 2-Isopropenyl-2-oxazolin, 2-Isopropenyl-4-methyl-2-oxazolin, 2-Isopropenyl-5-methyl-2-oxazolin, 2-Isopropenyl-4-ethyl-2-oxazolin, 2-Isopropenyl-5-ethyl-2-oxazolin, 2-Isopropenyl-4,4-dimethyl-2-oxazolin, 2- Isopropenyl-5,5-dimethyl-2-oxazolin und 2- Isopropenyl-4,4,5,5-tetramethyl-2-oxazolin, bevorzugt handelt es sich bei Monomer (b1) um 2-Isopropenyl-2-oxazolin (i-POx);
5 bis 50 Gew.-%, bevorzugt 7 bis 30 Gew.-%, des mindestens einen Monomers (b2), wobei es sich bei Monomer (b2) um ein monoethylenisch ungesättigtes Monomer (b2) handelt, welches genau eine Sulfonsäuregruppe ($-SO_3H$) umfasst, bevorzugt handelt es sich bei Monomer (b2) um 2-Acrylamido-2-methylpropansulfonsäure oder ein Alkali- und/oder Erdalkalimetallsalz von 2-Acrylamido-2-methylpropansulfonsäure, bevorzugt um 2-Acrylamido-2-methylpropansulfonsäure-Natriumsalz (AMPS-Na);
30 bis 85 Gew.-%, bevorzugt 40 bis 60 Gew.-% mindestens eines Monomers (b3), wobei es sich bei Monomer (b3) um mindestens ein $C_{1-12}$-Alkyl(meth)acrylat handelt, bevorzugt um mindestens ein $C_{1-6}$-Alkyl(meth)acrylate ausgewählt aus Methylacrylat (MA), Methylmethacrylat (MMA), Ethylacrylat (EA), Ethylmethacrylat (EMA), n-Butylacrylat (n-BA) und n-Butylmethacrylat (n-BMA);
0 bis 10 Gew.-%, bevorzugt 0 bis 5 Gew.-%, insbesondere bevorzugt 0 bis 1 Gew.-%, bevorzugt 0,1 bis 1 Gew.-%, mindestens einen weiteren, von den vorgenannten Monomeren verschiedenen Monomers und/oder Additivs.

In einer besonders bevorzugten Ausführungsform betrifft die Erfindung ein Polymer B gebildet aus:

25 bis 50 Gew.-% Isopropenyloxazolin (iPOx) als Monomer (b1);
5 bis 50 Gew.-% 2-Acrylamido-2-methylpropansulfonsäure-Natriumsalz (AMPS-Na) als Monomer (b2);
40 bis 60 Gew.-%, mindestens eines $C_{1-12}$-Alkyl(meth)acrylats ausgewählt aus Methylacrylat, Methylmethacrylat, Ethylacrylat, Ethylmethacrylat, n-Butylacrylat und n-Butylmethacrylat, als Monomer (b3);

0 bis 1 Gew.-%, mindestens eines weiteren, von den vorgenannten Monomeren verschiedenen Monomers und/oder Additivs.

Das gelöste Polymer (B) kann über eine Lösungspolymerisation hergestellt werden. Dadurch können niedrigere Molekulargewichte erreicht werden. Als Lösungsmittel können Wasser oder organische Lösungsmittel verwendet werden. Die verwendeten organischen Lösungsmittel werden nach der Polymerisation entfernt oder gegen Wasser ausgetauscht.

Die erfindungsgemäßen Polymerdispersionen werden erfindungsgemäß in wässrigen Klebstoffzubereitungen für die Herstellung von Laminaten, d. h. in wässrigen Kaschierklebstoffzubereitungen zum Verkleben von großflächigen Substraten. Insbesondere für die Herstellung von Verbundfolien verwendet.

Die vorliegende Erfindung betrifft somit auch ein Verfahren zur Herstellung von Verbundfolien, bei dem man eine wässrige Klebstoffzubereitung einsetzt, die wenigstens eine erfindungsgemäße Polymerdispersion umfasst. Hierbei können die wässrigen Polymerdispersionen als solche oder nach Konfektionierung mit üblichen Hilfsstoffen eingesetzt werden. Übliche Hilfsstoffe sind beispielsweise Netzmittel, Verdicker, weitere Schutzkolloide, Lichtschutzstabilisatoren, Biozide, Entschäumer, Tackifier usw. Bei dem Verfahren zur Herstellung von Verbundfolien werden mindestens zwei Folien unter Verwendung der wässrigen Polymerdispersion miteinander verklebt.

Bei dem erfindungsgemäßen Verfahren zur Herstellung von Verbundfolien wird die erfindungsgemäße Polymerdispersion oder eine entsprechend konfektionierte Zubereitung auf die zu verklebenden, großflächigen Substrate vorzugsweise mit einer Schichtdicke von 0,1 bis 20 g/m$^2$, besonders bevorzugt 1 bis 7 g/m$^2$ z. B. durch Rakeln, Streichen etc. aufgetragen. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z.B. 20 bis 200 °C, vorzugsweise 20 bis 100 °C und der Druck z. B. 100 bis 3000 kN/m$^2$, vorzugsweise 300 bis 2000 kN/m$^2$ betragen kann.

Vorzugsweise wird die erfindungsgemäße Polymerdispersion als Einkomponentenmittel angewendet, d.h. ohne zusätzliche Vernetzungsmittel, insbesondere ohne Isocyanatvernetzer. Wenigstens eine der Folien kann auf der mit dem Klebstoff beschichteten Seite bedruckt oder metallisiert sein. Als Substrate eignen sich z.B. Polymerfolien, insbesondere aus Polyethylen (PE), orientiertem Polypropylen (OPP), ungerecktes Polypropylen (CPP), Polyamid (PA), Polyethylenterephthalat (PET), Polyacetat, Zellophan, mit Metall, z. B. Aluminium, beschichtete (bedampfte) Polymerfolien (kurz : metallisierte Folien) oder Metallfolien, z. B. aus Aluminium. Die genannten Folien können miteinander oder mit einer Folie eines anderen Typs, z. B. Polymerfolien mit Metallfolien, verschiedene Polymerfolien miteinander etc. verklebt werden. Die genannten Folien können beispielsweise auch mit Druckfarben bedruckt sein.

Eine Ausführungsform der Erfindung ist eine Verbundfolie, hergestellt unter Verwendung einer der oben beschriebenen erfindungsgemäßen wässrigen Polymerdispersionen, wobei das Material einer ersten Folie ausgewählt ist aus OPP, CPP, PE, PET und PA und wobei das Material einer zweiten Folie ausgewählt ist aus OPP, CPP, PE, PET, PA und Metallfolie. In einer Ausführungsform der Erfindung ist die erste Folie und/oder die zweite Folie auf der jeweiligen Seite, welche mit der erfindungsgemäßen Polymerdispersion beschichtet wird, bedruckt oder metallisiert. Die Dicke der Substratfilme kann beispielsweise von 5 bis 100 $\mu$m, vorzugsweise von 5 bis 40 $\mu$m betragen.

Eine Oberflächenbehandlung der Foliensubstrate ist vor der Beschichtung mit einer erfindungsgemäßen Polymerdispersion nicht unbedingt erforderlich. Bessere Ergebnisse können aber erhalten werden, wenn die Oberfläche der Foliensubstrate vor der Beschichtung modifiziert werden. Hierbei können übliche Oberflächenbehandlungen angewendet werden, z.B. Coronabehandlung zur Verstärkung der Haftwirkung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Foliensubstrat und Klebstoffbeschichtung verwendet werden. Außerdem können die Verbundfolien, weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der mit Klebstoff beschichteten Seite abgewandten Seite des Foliensubstrats oder innen, zwischen Foliensubstrat und Klebstoffschicht befinden.

Es ist ein Vorteil der Erfindung, dass unterschiedlichste Substrate miteinander verklebt, d.h. kaschiert werden können, wobei die erfindungsgemäßen Polymerdispersionen eine gute Haftung der Klebstoffzubereitung an den Substraten gewährleisten und eine hohe Festigkeit des verklebten Verbundes bewirken. Zudem zeichnen sich die erfindungsgemäßen Polymerdispersionen durch eine gute Soforthaftung, eine gute Wärmestandfestigkeit, und deutlich gesteigerte Chemikalienresistenzen, besonders gegenüber öligen, sauren Nahrungsmitteln wie Tomatenketchup aus.

Besondere Vorteile des erfindungsgemäßen Herstellverfahrens und der erfindungsgemäßen Produkte sind insbesondere:

- lange Topfzeit im Vergleich mit Isocyanaten und Carbodiimiden
- gute Chemikalienbeständigkeit,
- gute Soforthaftung
- gute Wärmestandfestigkeit
- es kann nahezu emulgatorfrei gearbeitet werden (geringe Mengen an Emulgator bei Verwendung einer emulgatorstabilisierten Polymersaat sind unschädlich)
- Kostenersparnis im Vergleich zu anderen schutzkolloidstabilisierten Polymerdispersionen, da aufgrund der in situ-Herstellung des Schutzkolloids die separate Synthese, der Transport und die Lagerung des Schutzkolloids entfallen können

Beispiele

Bestimmung der Teilchengröße

Die Bestimmung der Teilchengröße erfolgt mittels der Hydrodynamischen Fraktionierung mit einem PSDA (ParticleSize Distribution Analyser) der Fa. Polymer Labs. Der verwendete Säulentyp Cartridge PL0850-1020 wird bei einem Durchfluss von 2 ml/min betrieben. Die Proben werden mit der Eluentlösung bis zu einer Absorption von 0,03 AU/µl verdünnt. Die Probe wird durch das Größenausschlussprinzip abhängig vom hydrodynamischen Durchmesser 10 eluiert. Das Elutionsmittel enthält 0,2 Gew.-% Dodecylpoly-(ethylenglycolether)23, 0,05 Gew.-% Natriumdodecylsulfat, 0,02 Gew.-% Natriumdihydrogenphosphat und 0,02 Gew.-% Natriumazid in entionisiertem-Wasser. Der pH liegt bei 5,8. Die Elutionszeit wird mit Polystyrol-Eichlatices kalibriert. Gemessen wird im Bereich 20 nm bis 1200 nm. Detektiert wird mit einem UV Detektor bei einer Wellenlänge 254 nm.

Bestimmung der Glasübergangstemperatur:

Die Glasübergangstemperatur wird mit Hilfe der Differentialkalorimetrie gemäß ASTM D 3418-08 gemessen. Zum Konditionieren werden die Polymere ausgegossen, über Nacht eingetrocknet, dann 1 h im Vakuumtrockenschrank bei 120°C getrocknet. Bei der Messung wird die Probe auf 150°C aufgeheizt, rasch abgekühlt und dann mit 20 °C/min aufheizend bis 150°C gemessen. Angegeben ist die sogenannte Mid-Point Temperatur.

Dispergiertes Polymer A

Vergleichsbeispiel A1: (2 pphm Itaconsäure, 0,1 pphm Acrylsäure, Tg = 5°C)

In einen 2L-Reaktor mit Ankerrührer, welcher auf 80°C geheizt wurde, wurden 5,8 g einer Polystyrolsaat (Feststoffgehalt (FG): 33%, Teilchengröße (TG): 30 nm) und 163,8 g entionisiertes Wasser gefüllt. Nach Erreichen einer Innentemperatur von 80°C wurden 42,9 g einer 7%igen Natriumperoxodisulfatlösung zugegeben und für 2 Minuten gerührt. Danach wurden über 60 min eine Emulsion bestehend aus 111,84 g entionisiertem Wasser, 6,0 g Itaconsäure, 1,1 g Natriumlauryl-polyethoxysulfat (Disponil® FES 27, 28%ig in Wasser, BASF SE), 28,5 g n-Butylacrylat, 79,5 g Methylacrylat und 0,6 g 2- Ethylhexylthioglykolat zudosiert. Gleichzeitig wurde die Reaktionstemperatur über 60 min auf 85°C erhöht. Anschließend wurde ein zweiter Emulsionszulauf bestehend aus 86,82 g entionisiertem Wasser, 4,3 g Natriumlauryl-polyethoxysulfat (Disponil® FES 27, 28%ig in Wasser, BASF SE), 0,6 g Acrylsäure, 12,0 g Hydroxypropylacrylat, 120,0 g n-Butylacrylat und 353,4 g Methylacrylat in 180 min zudosiert. 20 min nach Beginn des zweiten Emulsionszulaufs wurde über 160 min 49,2 g 3,7%ige Ammoniumhydroxidlösung zudosiert. Nach Ende des Zulaufs wurden 30,0 g entionisiertes Wasser zugegeben und die Temperatur auf 80°C gesenkt. Bei einer Innentemperatur von 80°C wurden über 120 min 44,6 g Acetonbisulfit (2,4%ig) und 12,0 g *tert*-Butylhydroperoxid (10%ig) zudosiert. Danach wurden 0,24 g Ammoniak (25%ig) und 32,7 g entionisiertes Wasser zugegeben und auf Raumtemperatur gekühlt. Die Dispersion hatte einen Feststoffgehalt von 52 %, einen pH-Wert von 7, eine Gesamtglastemperatur von 5 °C und eine Teilchengröße von 228 nm.

Beispiel A2: (1 pphm Itaconsäure, 0,5 pphm Methacrylsäure, Tg = -37°C)

In einen 2L-Reaktor mit Ankerrührer, welcher auf 80°C geheizt wurde, wurden 5,9 g einer Polystyrolsaat (FG: 33%, TG: 30 nm) und 166,5 g entionisiertes Wasser gefüllt. Nach Erreichen einer Innentemperatur von 80°C wurden 46,4 g einer 7%igen Natriumperoxodisulfatlösung zugegeben und für 2 Minuten gerührt. Danach wurden über 60 min eine Emulsion bestehend aus 123,4 g entionisiertem Wasser, 6,5 g Itaconsäure, 3,3 g Methacrylsäure, 1,2 g Natriumlauryl-polyethoxysulfat (Disponil® FES 27, 28%ig in Wasser, BASF SE), 110,5 g n-Butylacrylat, 34,1 g Methylacrylat und 13,0 g Styrol zudosiert. Gleichzeitig wurde die Reaktionstemperatur über 60 min auf 85°C erhöht. Anschließend

wurde ein zweiter Emulsionszulauf bestehend aus 92,7 g entionisiertem Wasser, 4,6 g Natriumlauryl-polyethoxysulfat (Disponil® FES 27, 28%ig in Wasser, BASF SE), 29,3 g Styrol, 438,8 g n-Butylacrylat und 14,6 g Methylacrylat in 180 min zudosiert. 20 min nach Beginn des zweiten Emulsionszulaufs wurde über 120 min 58,5 g einer 5,6 %igen Ammoniumhydroxidlösung zudosiert. Nach Ende des Zulaufs wurden 30,0 g entionisiertes Wasser zugegeben und die Temperatur auf 80°C gesenkt. Bei einer Innentemperatur von 80°C wurden über 120 min 33,0 g Acetonbisulfit (3,5 %ig) und 13,0 g *tert*-Butylhydroperoxid (10%ig) zudosiert. Danach wurden 0,26 g Ammoniak (25%ig) und 41,6 g entionisiertes Wasser zugegeben und auf Raumtemperatur gekühlt. Die Dispersion hatte einen Feststoffgehalt von 49%, einen pH-Wert von 7,5, eine Gesamtglastemperatur von -37 °C und eine Teilchengröße von 253 nm.

Beispiel A3 (1 pphm Itaconsäure und 0,5 pphm Acrylsäure, Tg = -37°C):

In einen 2L-Reaktor mit Ankerrührer, welcher auf 80°C geheizt wurde, wurden 6,6 g einer Polystyrolsaat (FG: 33%, TG: 30nm) und 184,4 g entionisiertes Wasser gefüllt. Nach Erreichen einer Innentemperatur von 80°C wurden 51,43 g einer 7%igen Natriumperoxodisulfatlösung zugegeben und für 2 Minuten gerührt. Danach wurden über 60 min eine Emulsion bestehend aus 136,7 g entionisiertem Wasser, 7,2 g Itaconsäure, 3,6 g Acrylsäure, 1,3 g Natriumlauryl-polyethoxysulfat (Disponil® FES 27, 28%ig in Wasser, BASF SE), 122,4 g n-Butylacrylat, 37,8 g Methylacrylat und 14,4 g Styrol zudosiert. Gleichzeitig wurde die Reaktionstemperatur über 60 min auf 85°C erhöht. Anschließend wurde ein zweiter Emulsionszulauf bestehend aus 102,7 g entionisiertem Wasser, 5,1 g Natriumlauryl-polyethoxysulfat (Disponil® FES 27, 28%ig in Wasser, BASF SE), 32,4 g Styrol, 486,0 g n-Butylacrylat und 16,2 g Methylacrylat in 180 min zudosiert. 20 min nach Beginn des zweiten Emulsionszulaufs wurde über 120 min 64,8 g einer 5,6 %igen Ammoniumhydroxidlösung und 10,3 g einer 7%igen Natriumperoxodisulfatlösung zudosiert. Nach Ende des Zulaufs wurden 46,1 g entionisiertes Wasser zugegeben und die Temperatur auf 80°C gesenkt. Bei einer Innentemperatur von 80°C wurden über 120 min 39,3 g Acetonbisulfit (7 %ig) und 14,4 g *tert*-Butylhydroperoxid (10%ig) zudosiert. Danach wurden 0,3 g Ammoniak (25%ig) und 46,1 g entionisiertes Wasser zugegeben und auf Raumtemperatur gekühlt. Die Dispersion hatte einen Feststoffgehalt von 52%, einen pH-Wert von 8,3, eine Gesamtglastemperatur von -37 °C und eine Teilchengröße von 190 nm.

Vergleichsbeispielbeispiel A4 (1 pphm Itaconsäure und 0,5 pphm Acrylsäure, 2,5 pphm Disponil® FES 27, Tg = -37°C)

In einen 2L-Reaktor mit Ankerrührer, welcher auf 80°C geheizt wurde, wurden 5,5 g einer Polystyrolsaat (FG: 33%, TG: 30 nm) und 153,7 g entionisiertes Wasser gefüllt. Nach Erreichen einer Innentemperatur von 80°C wurden 42,9 g einer 7%igen Natriumperoxodisulfatlösung zugegeben und für 2 Minuten gerührt. Danach wurden über 60 min eine Emulsion bestehend aus 110,1 g entionisiertem Wasser, 6,0 g Itaconsäure, 3,0 g Acrylsäure, 10,7 g Natriumlauryl-polyethoxysulfat (Disponil® FES 27, 28%ig in Wasser, BASF SE), 102,0 g n-Butylacrylat, 31,5 g Methylacrylat und 12,0 g Styrol zudosiert. Gleichzeitig wurde die Reaktionstemperatur über 60 min auf 85°C erhöht. Anschließend wurde ein zweiter Emulsionszulauf bestehend aus 67,3 g entionisiertem Wasser, 42,9 g Natriumlauryl-polyethoxysulfat (Disponil® FES 27, 28%ig in Wasser, BASF SE), 27,0 g Styrol, 405,0 g n-Butylacrylat und 13,5 g Methylacrylat in 120 min zudosiert. 20 min nach Beginn des zweiten Emulsionszulaufs wurde über 120 min 54,0 g einer 5,6 %igen Ammoniumhydroxidlösung zudosiert. Nach Ende des Zulaufs wurden 38,4 g entionisiertes Wasser zugegeben und die Temperatur auf 80°C gesenkt. Bei einer Innentemperatur von 80°C wurden über 120 min 30,0 g Acetonbisulfit (3,5 %ig) und 13,0 g *tert*-Butylhydroperoxid (10%ig) zudosiert. Danach wurden 0,24 g Ammoniak (25%ig) und 38,4 g entionisiertes Wasser zugegeben und auf Raumtemperatur gekühlt. Die Dispersion hatte einen Feststoffgehalt von 49 %, einen pH-Wert von 7,5, eine Gesamtglastemperatur von -37 °C und eine Teilchengröße von 184 nm.

Vergleichsbeispiel A5 (1 pphm Itaconsäure und 0,5 pphm Acrylsäure, 1 pphm Disponil® FES 27, Tg = -37°C)

In einen 2L-Reaktor mit Ankerrührer, welcher auf 80°C geheizt wurde, wurden 5,5 g einer Polystyrolsaat (FG: 33%, TG: 30 nm) und 153,7 g entionisiertes Wasser gefüllt. Nach Erreichen einer Innentemperatur von 80°C wurden 42,9 g einer 7%igen Natriumperoxodisulfatlösung zugegeben und für 2 Minuten gerührt. Danach wurden über 60 min eine Emulsion bestehend aus 110,1 g entionisiertem Wasser, 6,0 g Itaconsäure, 3,0 g Acrylsäure, 4,3 g Natriumlauryl-polyethoxysulfat (Disponil® FES 27, 28%ig in Wasser, BASF SE), 102,0 g n-Butylacrylat, 31,5 g Methylacrylat und 12,0 g Styrol zudosiert. Gleichzeitig wurde die Reaktionstemperatur über 60 min auf 85°C erhöht. Anschließend wurde ein zweiter Emulsionszulauf bestehend aus 67,3 g entionisiertem Wasser, 17,1 g Natriumlauryl-polyethoxysulfat (Disponil(® FES 27, 28%ig in Wasser, BASF SE), 27,0 g Styrol, 405,0 g n-Butylacrylat und 13,5 g Methylacrylat in 120 min zudosiert. 20 min nach Beginn des zweiten Emulsionszulaufs wurde über 120min 54,0 g einer 5,6 %ig Ammoniumhydroxidlösung zudosiert. Nach Ende des Zulaufs wurden 38,4 g entionisiertes Wasser zugegeben und die Temperatur auf 80°C gesenkt. Bei einer Innentemperatur von 80°C wurden über 120 min 30,0 g Acetonbisulfit (3,5 %ig) und 13,0 g *tert*-Butylhydroperoxid (10%ig) zudosiert. Danach wurden 0,24 g Ammoniak (25%ig) und 38,4 g entionisiertes Wasser zugegeben und auf

Raumtemperatur gekühlt. Die Dispersion hatte einen Feststoffgehalt von 50 %, einen pH-Wert von 8,4, eine Gesamtglastemperatur von -37 °C und eine Teilchengröße von 184 nm.

Oxazolinhaltige Polymere (Gelöstes Polymer B)

Polymeradditiv B1:

Epocros® WS 700 (Methoxypolyethylenglykol / 2- Isopropenyl-2-oxazolin Copolymer), kommerziell erhältliches oxazolinhaltiges Copolymer, Feststoffgehalt 25 Gew.-% gelöst in Wasser, Oxazolingehalt 4,5 mmol/ Gramm Feststoff, Mn: 20000 g/mol, Mw: 40000 g/mol.

Polymeradditiv B2:

In einen 2L-Reaktor mit Ankerrührer wurden 420 g entionisiertes Wasser, 308 g *iso*-Propanol und 5,6 g 2,2'-Azobis(2-methylbutyronitril) gefüllt und unter Stickstoffatmosphäre auf 70°C geheizt. Anschließend wurde eine Mischung aus 72,8 g Methymethacrylat. 61,6 g n-Butylacrylat und 67,2 g 2- Isopropenyl-2-oxazolin und in einem separaten Zulauf 44,8 g 2-Acrylamido-2-methylpropansulfonsäure (Natriumsalz) (50 %ige Lösung in Wasser) innerhalb von 180 min zugegeben. Zeitgleich wurde über 210 min eine Lösung aus 5,6 g 2,2'-Azobis(2-methylbutyronitril) in 140 g *iso*-Propanol zugegeben. Nach Beenden der Zuläufe wurde für 5 Stunden bei 75°C nachpolymerisiert. Das *iso*-Propanol wurde anschließend bei 85°C unter Vakuum abdestilliert und eine Menge Wasser zugegeben, bis ein Feststoffgehalt von 18% erreicht wurde. Das gewichtgemittelte Molekulargewicht des Polymers lag bei 79500 g/mol. Die Glasübergangstemperatur des Polymers lag bei 81 °C.

Polymeradditiv B3

In einen 2L-Reaktor mit Ankerrührer wurden 420 g entionisiertes Wasser, 308 g *iso* Propanol und 5,6 g 2,2'-Azobis(2-methylbutyronitril) gefüllt und unter Stickstoffatmosphäre auf 70°C geheizt. Anschließend wurde eine Mischung aus 67,2 g Methylacrylat. 67,2 g n-Butylacrylat und 67,2 g 2- Isopropenyl-2-oxazolin und in einem separaten Zulauf 44,8 g 2-Acrylamido-2-methylpropansulfonsäure (Natriumsalz) (50 %ige Lösung in Wasser) innerhalb von 180 min zugegeben. Zeitgleich wurde über 210 min eine Lösung aus 5,6 g 2,2'-Azobis(2-methylbutyronitril) in 140 g *iso* Propanol zugegeben. Nach Beenden der Zuläufe wurde für 5 Stunden bei 75°C nachpolymerisiert. Das *iso* Propanol wurde anschließend bei 85°C unter Vakuum abdestilliert und eine Menge Wasser zugegeben, bis ein Feststoffgehalt von 24% erreicht wurde. Das gewichtgemittelte Molekulargewicht des Polymers lag bei 146000 g/mol. Die Glasübergangstemperatur des Polymers lag bei 36°C.

Polymeradditiv B4

In einen 2L-Reaktor mit Ankerrührer wurden 420 g entionisiertes Wasser, 308 g *iso* Propanol und 5,6 g 2,2'-Azobis(2-methylbutyronitril) gefüllt und unter Stickstoffatmosphäre auf 70°C geheizt. Anschließend wurde eine Mischung aus 134,4 g n-Butylacrylat und 67,2 g 2- Isopropenyl-2-oxazolin und in einem separaten Zulauf 44,8 g 2-Acrylamido-2-methylpropansulfonsäure (Natriumsalz) (50 %ige Lösung in Wasser) innerhalb von 180 min zugegeben. Zeitgleich wurde über 210 min eine Lösung aus 5,6 g 2,2'-Azobis(2-methylbutyronitril) in 140 g *iso* Propanol zugegeben. Nach Beenden der Zuläufe wurde für 5 Stunden bei 75°C nachpolymerisiert. Das *iso* Propanol wurde anschließend bei 85°C unter Vakuum abdestilliert und eine Menge Wasser zugegeben, bis ein Feststoffgehalt von 20% erreicht wurde. Das gewichtgemittelte Molekulargewicht des Polymers lag bei 114000 g/mol. Die Glasübergangstemperatur des Polymers lag bei 6°C.

Polymeradditiv B5

In einem Reaktor mit Ankerrührer wurden 1512,0 g entionisiertes Wasser und 18,0 g 2,2'-Azo-bis(2-methylpropionamidin)dihydrochlorid unter Stickstoffatmosphäre auf 70°C geheizt. Anschließend wurde eine Mischung aus 90,0 g n-Butylacrylat, 90 g Methylmethacrylat, 108,0 g 2-Isopropenyl-2-oxazolin und 72 g Methoxypolyethylenglykol 550 Methacrylate (Bisomer® MPEG 550, GEO Specialty Chemicals) innerhalb von 120 min zugegeben Nach Ende der Monomerzuläufe wurde 9 Stunden bei 60°C nachpolymerisiert. Das zahlengemittelte Molekulargewicht des Polymers lag bei 16300 g/mol.

Vergleichsbeispiel

Polymeradditiv B6: Wasserunlösliches Oxazolingruppen enthaltendes Polymer

In einen 2L-Reaktor mit Ankerrührer wurden 200 g *iso* Propanol unter Stickstoffatmosphäre auf 70°C geheizt. Anschließend wurde eine Mischung aus 60 g Ethylacrylat, 80 g Methylmethacrylat und 60 g 2- Isopropenyl-2-oxazolin und in einem separaten Zulauf 10 g 2,2'-Azobis(2-methylbutyronitril) in 90 g Isopropanol innerhalb von 180 min zugegeben. Nach Beenden der Zuläufe wurde für 5 Stunden bei 75°C nachpolymerisiert. Das gewichtgemittelte Molekulargewicht des Polymers lag bei 53100 g/mol. Die Glasübergangstemperatur des Polymers lag bei 76°C.

Das Polymer ließ sich nicht in einer wässrigen Dispersion stabil formulieren, da es bei Zugabe von Wasser ausfällt.

Formulierungen:

Die Dispersionen der Beispiele A1 bis A5 wurden mit den oxazolinhaltigen Polymeradditiven B1 bis B5 in den Verhältnisse, wie in Tabelle 1 angegeben abgemischt. Polymeradditiv B6 war nicht stabil in wässriger Dispersion mischbar.

Herstellung von Verbundfolien:

Die abgemischten Polymerdispersionen werden mit einer Trockenschichtdicke von 2 g/m$^2$ (bezogen auf Feststoffgehalt) auf handelsübliche Folien gerakelt (OPP-ink; bedrucktes orientiertes Polypropylen). Nach Trocknen mit Warmluft werden die so beschichteten Folien mit einer zweiten Folie (metallisiertes cast PP) aufgerollt und anschließend mit einem Druck von 6,5 bar in einer Rollenpresse mit 5 m/min bei 70 °C verpresst. Anschließend werden die Verbundfolien 1 Tag bei Raumtemperatur und Normklima gelagert.

Bestimmung der Schälfestigkeit (Soforthaftung und Wärmestandfestigkeit):

Zur Bestimmung der Schälfestigkeit werden die Verbundfolien in 15 mm breite Streifen zerschnitten. Anschließend werden die Streifen bei 23 °C in einer Universalprüfmaschine für Schälfestigkeiten der Fa. Zwick (Typ 1120.25.01) mit einer Geschwindigkeit von 100 mm/min bei einem Winkel von 2 x 90° (180°) abgezogen und die hierfür erforderliche Kraft in Newton gemessen. Zur Bestimmung der Soforthaftung wurde die Schälfestigkeit bei 23 °C nach 1 Minute gemessen (Sofortschälfestigkeit). Zur Bestimmung der Wärmestandfestigkeit wurde die Schälfestigkeit in einer beheizten Kammer bei 90 °C gemessen. Um die Chemikalienbeständigkeit der Klebstoffe zu beschreiben, wurden die Laminate 7 Tage bei 50°C in Tomatenketchup gelagert und danach von ihnen bei 23°C die Schälfestigkeiten ermittelt.
Die "Schälfestigkeit 24 h" ist diejenige Schälfestigkeit, die 24 Stunden nach Erstellung der Laminate bei Raumtemperatur (23°C) ermittelt wird.
Die Ergebnisse sind in Tabelle 1 zusammengestellt.

Tabelle 1: Testergebnisse Schälfestigkeiten von Laminierfolien:

| Polymer A | Polymer B | Gewichtsverhältnis A/B (fest/fest) | Schälfestigkeit 24 h [N/15mm] | Schälfestigkeit 90°C [N/15mm] | Schälfestigkeit 7d/50°C in Ketchup [N/15mm] |
|---|---|---|---|---|---|
| A1[1)] | - | | 0,6 | 0,9 | < 0,1 |
| A1[1)] | B1 | 25/1 | 1,0 | 0,9 | 3,0 (MB) |
| A1[1)] | B5 | 14/1 | 0,7 | 0,8 | 3,3 (MB) |
| A2 | - | - | 1,8 | 0,3 | 1,0 |
| A2 | B1 | 20/1 | 2,6 | 0,3 | 3,9 (MB) |
| A3 | - | | 1,1 | 0,2 | 1,1 |
| A3 | B2 | 12/1 | 2,7 | 0,3 | 2,8 |
| A3 | B2 | 24/1 | 3,4 | 0,5 | 2,4 |
| A3 | B3 | 24/1 | 3,5 | 0,4 | 3,1 |
| A3 | B4 | 24/1 | 3,2 | 0,5 | 3,1 |

(fortgesetzt)

| Polymer A | Polymer B | Gewichtsverhältnis A/B (fest/fest) | Schälfestigkeit 24 h [N/15mm] | Schälfestigkeit 90°C [N/15mm] | Schälfestigkeit 7d/50°C in Ketchup [N/15mm] |
|---|---|---|---|---|---|
| A5[1)] | - | | 1,6 | 0,2 | 1,3 |
| A5[1)] | B2 | 24/1 | 2,8 | 0,2 | 2,7 |
| A5[1)] | B3 | 24/1 | 2,8 | 0,2 | 2,5 |
| A5[1)] | B4 | 24/1 | 2,5 | 0,3 | 2,6 |
| [1)] Vergleich; (MB) Materialbruch in den kaschierten Folien | | | | | |

Tabelle 2: Testergebnisse Schälfestigkeiten von Laminierfolien:

| Polymer A | Polymer B | Gewichtsverhältnis A/B (fest/fest) | Sofortschälfestigkeit [N/15mm] | Schälfestigkeit 24 h [N/15mm] |
|---|---|---|---|---|
| A2 | B1 | 20/1 | 2,0 | 2,6 |
| A4[1)] | B1 | 20/1 | 1,2 | 1,9 |
| [1)] Vergleich | | | | |

Die Beispiele mit erfindungsgemäß kombinierten Polymeren A und B zeigen eine signifikant erhöhte Schälfestigkeit im Vergleich zu den reinen Dispersionen. Die Abmischungen aus Vergleichsbeispiel A1 mit einer Glasübergangstemperatur Tg des Polymers A von größer als 0 °C zeigen, dass mit hoher Tg nur relativ geringe Schälfestigkeiten nach 24 h erhalten werden. Die Schälfestigkeiten nach Ketchuplagerung können durch Oxazolinzugabe signifikant gesteigert werden.

Die Abmischungen von Vergleichbeispiel A5 (mit 1 pphm Emulgator) und die Werte in Tabelle 2 zeigen den negativen Einfluss von Emulgatoren auf die Sofortschälfestigkeit und die Schälfestigkeit nach 24 h.

**Patentansprüche**

**1.** Wässrige Polymerdispersion für die Verbundfolienkaschierung enthaltend

(A) mindestens ein dispergiertes Polymer A, hergestellt durch radikalische Emulsionspolymerisation,

- wobei zunächst in einer ersten Stufe in wässrigem Medium durch radikalische Emulsionspolymerisation ein in Wasser dispergiertes erstes Polymerisat hergestellt wird, wobei das erste Polymerisat hergestellt wird aus einer ersten Zusammensetzung, enthaltend ethylenisch ungesättigte, radikalisch polymerisierbare Monomere, wobei die Monomeren der ersten Stufe mindestens ein Monomer mit mindestens einer Säuregruppe in einer Menge von mindestens 0,1 Gewichtsteilen, bezogen auf 100 Gewichtsteile der Gesamtmenge an Monomeren der ersten und zweiten Stufe, umfassen, und
- anschließend in einer zweiten Stufe eine Polymerdispersion in wässrigem Medium und in Gegenwart des ersten Polymerisats durch radikalische Emulsionspolymerisation einer von der ersten Zusammensetzung verschiedenen zweiten Zusammensetzung, enthaltend ethylenisch ungesättigte, radikalisch polymerisierbare Monomere, hergestellt wird,
- wobei insgesamt weniger als 0,5 Gewichtsteile Emulgator, bezogen auf 100 Gewichtsteile Monomere des Polymers A, oder kein Emulgator verwendet werden, und
- wobei die Glasübergangstemperatur des hergestellten Polymers A kleiner als 0 °C beträgt; und

(B) mindestens ein in der wässrigen Polymerdispersion gelöstes Polymer B, hergestellt durch radikalische Polymerisation von

(b1) mindestens einem ethylenisch ungesättigten, radikalisch polymerisierbaren Monomer mit mindestens einer Oxazolingruppe, und
(b2) mindestens 5 Gew. % bezogen auf die Gesamtmonomermenge des Polymers B mindestens eines

hydrophilen ethylenisch ungesättigten, radikalisch polymerisierbaren Monomer ohne Oxazolingruppe und mit einer Wasserlöslichkeit von mindestens 100 g/l bei 25 °C,

und optional weiteren Monomeren (b3).

2. Polymerdispersion nach dem vorhergehenden Anspruch, **dadurch gekennzeichnet, dass** die Polymerisation der ersten Stufe bei einem pH-Wert kleiner 5 erfolgt und vor oder während der Polymerisation der zweiten Stufe die Säuregruppen des ersten Polymerisats soweit mit wässriger Ammoniaklösung neutralisiert werden, dass der pH-Wert der Polymerdispersion am Ende der zweiten Stufe größer 5 beträgt.

3. Polymerdispersion nach einem der vorhergehenden Ansprüche, **dadurch gekennzeichnet, dass** die Oxazolingruppen enthaltenden Monomere (b1) in dem Polymer (B) in einer Menge von 10 bis 60 Gewichtsteilen auf 100 Gewichtsteile Monomere des Polymers (B) eingesetzt werden.

4. Polymerdispersion nach einem der vorhergehenden Ansprüche, **dadurch gekennzeichnet, dass** das Oxazolingruppen enthaltende Monomer ausgewählt ist aus Verbindungen der Formel

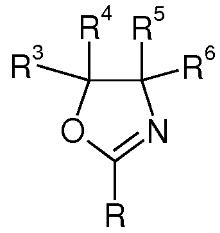

wobei die Reste die folgenden Bedeutungen haben:

R ist ein $C_{2-20}$-Alkenylrest umfassend mindestens eine ethylenisch ungesättigte Gruppe;
$R^3$, $R^4$, $R^5$, $R^6$ sind unabhängig voneinander ausgewählt aus H, Halogen, $C_{1-20}$-Alkyl, $C_{2-20}$-Alkenyl, $C_{6-20}$-Aryl, $C_{7-32}$-Arylalkyl, $C_{1-20}$-Hydroxyalkyl, $C_{1-20}$-Aminoalkyl und $C_{1-20}$-Haloalkyl.

5. Polymerdispersion nach einem der vorhergehenden Ansprüche, **dadurch gekennzeichnet, dass** die Oxazolingruppen enthaltenden Monomere ausgewählt sind aus 2-Vinyl-2-oxazolin, 2-Vinyl-4-methyl-2-oxazolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-tetramethyl-2-oxazolin, 2-Isopropenyl-2-oxazolin, 2-Isopropenyl-4-methyl-2-oxazolin, 2-Iso-propenyl-5-methyl-2-oxazolin, 2-Isopropenyl-4-ethyl-2-oxazolin, 2-Isopropenyl-5-ethyl-2-oxazolin, 2-Isopropenyl-4,4-dimethyl-2-oxazolin, 2- Isopropenyl-5,5-dimethyl-2-oxazolin und 2-Isopropenyl-4,4,5,5-tetramethyl-2-oxazolin.

6. Polymerdispersion nach einem der vorhergehenden Ansprüche, **dadurch gekennzeichnet, dass** in der ersten Stufe Säuregruppen aufweisende Monomere mit Monomeren ohne Säuregruppen copolymerisiert werden, wobei das Gewichtsverhältnis von Säuregruppen aufweisenden Monomeren zu Monomeren ohne Säuregruppen im Bereich von 1:99 bis 20:80 liegt.

7. Polymerdispersion nach einem der vorhergehenden Ansprüche, **dadurch gekennzeichnet, dass** die in der ersten Stufe eingesetzten Monomeren mit mindestens einer Säuregruppe ausgewählt sind aus der Gruppe bestehend aus Acrylsäure, Methacrylsäure, Itaconsäure, Maleinsäure, Fumarsäure, Crotonsäure, Vinylessigsäure, Vinylmilchsäure und Mischungen dieser Monomere; und die in der ersten Stufe eingesetzten Monomeren ohne Säuregruppe ausgewählt sind aus der Gruppe bestehend aus C1- bis C10-Alkylacrylaten und C1- bis C10-Alkylmethacrylaten und Mischungen dieser Monomere.

8. Polymerdispersion nach einem der vorhergehenden Ansprüche, **dadurch gekennzeichnet, dass** mindestens 60 Gew.% der in der zweiten Stufe eingesetzten Monomeren ausgewählt sind aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere.

**9.** Polymerdispersion nach einem der vorhergehenden Ansprüche, **dadurch gekennzeichnet, dass** die Polymerisate der ersten und zweiten Stufe abgesehen von den Säuremonomeren ausschließlich aus Derivaten der (Meth)acrylsäure gebildet sind.

**10.** Polymerdispersion nach einem der vorhergehenden Ansprüche, **dadurch gekennzeichnet, dass** bei der Polymerisation der ersten Stufe ein Molekulargewichtsregler eingesetzt wird.

**11.** Polymerdispersion nach einem der vorhergehenden Ansprüche, **dadurch gekennzeichnet, dass** das Gewichtsverhältnis der Menge der in der ersten Stufe eingesetzten Monomere zur Menge der in der zweiten Stufe eingesetzten Monomere von 5:95 bis 50:50 beträgt.

**12.** Polymerdispersion nach einem der vorhergehenden Ansprüche, **dadurch gekennzeichnet, dass** die Polymerisation der ersten Stufe in Gegenwart eines Saatlatex erfolgt.

**13.** Polymerdispersion nach einem der vorhergehenden Ansprüche, **dadurch gekennzeichnet, dass** die in der zweiten Stufe eingesetzten Monomeren maximal 1 Gewichtsteil Monomere mit Säuregruppen, bezogen auf 100 Gewichtsteile Monomere des Polymers (A), oder keine Monomere mit Säuregruppen umfassen.

**14.** Polymerdispersion nach einem der vorhergehenden Ansprüche, **dadurch gekennzeichnet, dass** das molare Verhältnis von Säuregruppen des Polymers A zu Oxazolingruppen des Polymers B von 20:1 bis 1:1 beträgt.

**15.** Polymerdispersion nach einem der vorhergehenden Ansprüche, **dadurch gekennzeichnet, dass** das Gewichtsverhältnis von Polymer A zu Polymer B von 5:1 bis 50:1 beträgt.

**16.** Polymerdispersion nach einem der vorhergehenden Ansprüche, **dadurch gekennzeichnet, dass** das Monomer (b2) ausgewählt ist aus der Gruppe bestehend aus den Salzen von ethylenisch ungesättigten Sulfonsäuren, Acrylamid, Methacrylamid, den Estern ungesättigter Carbonsäuren mit Polyethylenglykol, den Estern ungesättigter Carbonsäuren mit Alkylpolyethylenglykol oder Mischungen dieser Monomere.

**17.** Verfahren zur Herstellung einer wässrigen Polymerdispersion für die Verbundfolienkaschierung, wobei durch radikalische Emulsionspolymerisation ein in wässriger Phase dispergiertes Polymer (A) hergestellt wird

- wobei zunächst in einer ersten Stufe in wässrigem Medium durch radikalische Emulsionspolymerisation ein in Wasser dispergiertes erstes Polymerisat hergestellt wird, wobei das erste Polymerisat hergestellt wird aus einer ersten Zusammensetzung, enthaltend ethylenisch ungesättigte, radikalisch polymerisierbare Monomere, wobei die Monomeren der ersten Stufe mindestens ein Monomer mit mindestens einer Säuregruppe in einer Menge von mindestens 0,1 Gewichtsteilen, bezogen auf 100 Gewichtsteile der Gesamtmenge an Monomeren der ersten und zweiten Stufe, umfassen, und
- anschließend in einer zweiten Stufe eine Polymerdispersion in wässrigem Medium und in Gegenwart des ersten Polymerisats durch radikalische Emulsionspolymerisation einer von der ersten Zusammensetzung verschiedenen zweiten Zusammensetzung, enthaltend ethylenisch ungesättigte, radikalisch polymerisierbare Monomere, hergestellt wird,
- wobei insgesamt weniger als 0,5 Gewichtsteile, bezogen auf 100 Gewichtsteile Monomere des Polymers (A), oder kein Emulgator verwendet werden, und
- wobei die Glasübergangstemperatur des hergestellten Polymerisats (A) kleiner als 0 °C beträgt; und

wobei das dispergierte Polymer (A) mit einem in der Polymerdispersion löslichen Polymers (B) gemischt wird und das Polymer (B) hergestellt ist durch radikalische Polymerisation von (b1

) mindestens einem ethylenisch ungesättigten, radikalisch polymerisierbaren Monomer mit mindestens einer Oxazolingruppe, und
(b2) mindestens 5 Gew.% bezogen auf die Gesamtmonomermenge des Polymers B mindestens eines hydrophilen ethylenisch ungesättigten, radikalisch polymerisierbaren Monomer ohne Oxazolingruppe und mit einer Wasserlöslichkeit von mindestens 100 g/l bei 25 °C,

und optional weiteren Monomeren (b3).

**18.** Verwendung der wässrigen Polymerdispersion nach einem der Ansprüche 1 bis 16 oder der nach dem vorhergehenden Anspruch hergestellten wässrigen Polymerdispersion als Kaschierklebstoff, zur Herstellung von Kaschierklebstoffen oder bei der Herstellung von Verbundfolien.

**19.** Verbundfolie, welche eine erste und mindestens eine zweite Folie aufweist, welche miteinander verklebt sind unter Verwendung eines Klebstoffs enthaltend die wässrige Polymerdispersion gemäß einem der Ansprüche 1 bis 16 oder einer nach Anspruch 17 hergestellten wässrigen Polymerdispersion.

**20.** Verfahren zur Herstellung von Verbundfolien, **dadurch gekennzeichnet, dass** eine wässrige Polymerdispersion gemäß einem der Ansprüche 1 bis 16 oder eine nach Anspruch 17 hergestellte wässrige Polymerdispersion zur Verfügung gestellt wird und mindestens zwei Folien unter Verwendung der wässrigen Polymerdispersion miteinander verklebt werden.

**Claims**

**1.** An aqueous polymer dispersion for composite film lamination, comprising

(A) at least one dispersed polymer A prepared by radical emulsion polymerization,

- where initially in a first stage in aqueous medium a first polymer dispersed in water is prepared by radical emulsion polymerization, the first polymer being prepared from a first composition comprising ethylenically unsaturated radically polymerizable monomers, where the monomers of the first stage comprise at least one monomer having at least one acid group in an amount of at least 0.1 part by weight, based on 100 parts by weight of the total amount of monomers of the first and second stages, and
- subsequently in a second stage a polymer dispersion is prepared in aqueous medium and in the presence of the first polymer by radical emulsion polymerization of a second composition comprising ethylenically unsaturated, radically polymerizable monomers, different from the first composition,
- where in total less than 0.5 part by weight of emulsifier, based on 100 parts by weight of monomers of the polymer A, or no emulsifier is used, and
- where the glass transition temperature of the polymer A prepared is less than 0°C; and

(B) at least one polymer B, in solution in the aqueous polymer dispersion and prepared by radical polymerization of

(b1) at least one ethylenically unsaturated, radically polymerizable monomer having at least one oxazoline group, and
(b2) at least 5% by weight, based on the total monomer amount of the polymer B, of at least one hydrophilic, ethylenically unsaturated, radically polymerizable monomer without oxazoline group and with a water solubility of at least 100 g/l at 25°C,

and optionally further monomers (b3).

**2.** The polymer dispersion according to the preceding claim, wherein the polymerization of the first stage takes place at a pH of less than 5, and before or during the polymerization of the second stage, the acid groups of the first polymer are neutralized with aqueous ammonia solution to an extent such that the pH of the polymer dispersion at the end of the second stage is greater than 5.

**3.** The polymer dispersion according to either of the preceding claims, wherein the monomers (b1) comprising oxazoline groups are used in the polymer (B) in an amount of 10 to 60 parts by weight per 100 parts by weight of monomers of the polymer (B).

**4.** The polymer dispersion according to any of the preceding claims, wherein the monomer comprising oxazoline groups is selected from compounds of the formula

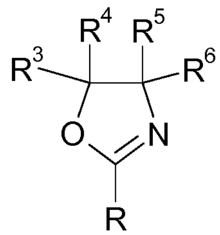

where the radicals have the following definitions:

R is a $C_{2-20}$ alkenyl radical comprising at least one ethylenically unsaturated group;
$R^3$, $R^4$, $R^5$, and $R^6$ are selected independently of one another from H, halogen, $C_{1-20}$ alkyl, $C_{2-20}$ alkenyl, $C_{6-20}$ aryl, $C_{7-32}$ arylalkyl, $C_{1-20}$ hydroxyalkyl, $C_{1-20}$ aminoalkyl, and $C_{1-20}$ haloalkyl.

**5.** The polymer dispersion according to any of the preceding claims, wherein the monomers comprising oxazoline groups are selected from 2-vinyl-2-oxazoline, 2-vinyl-4-methyl-2-oxazoline, 2-vinyl-5-methyl-2-oxazoline, 2-vinyl-4-ethyl-2-oxazoline, 2-vinyl-4,4-dimethyl-2-oxazoline, 2-vinyl-5,5-dimethyl-2-oxazoline, 2-vinyl-4,4,5,5-tetramethyl-2-oxazoline, 2-isopropenyl-2-oxazoline, 2-isopropenyl-4-methyl-2-oxazoline, 2-isopropenyl-5-methyl-2-oxazoline, 2-isopropenyl-4-ethyl-2-oxazoline, 2-isopropenyl-5-ethyl-2-oxazoline, 2-isopropenyl-4,4-dimethyl-2-oxazoline, 2-isopropenyl-5,5-dimethyl-2-oxazoline, and 2-isopropenyl-4,4,5,5-tetramethyl-2-oxazoline.

**6.** The polymer dispersion according to any of the preceding claims, wherein, in the first stage, monomers containing acid groups are copolymerized with monomers without acid groups, the weight ratio of monomers containing acid groups to monomers without acid groups being in the range from 1:99 to 20:80.

**7.** The polymer dispersion according to any of the preceding claims, wherein the monomers with at least one acid group that are used in the first stage are selected from the group consisting of acrylic acid, methacrylic acid, itaconic acid, maleic acid, fumaric acid, crotonic acid, vinylacetic acid, vinyllactic acid, and mixtures of these monomers; and the monomers without acid group that are used in the first stage are selected from the group consisting of C1 to C10 alkyl acrylates and C1 to C10 alkyl methacrylates, and mixtures of these monomers.

**8.** The polymer dispersion according to any of the preceding claims, wherein at least 60% by weight of the monomers used in the second stage are selected from the group consisting of C1 to C20 alkyl acrylates, C1 to C20 alkyl methacrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers.

**9.** The polymer dispersion according to any of the preceding claims, wherein the polymers of the first and second stages are polymers which apart from the acid monomers are formed exclusively of derivatives of (meth)acrylic acid.

**10.** The polymer dispersion according to any of the preceding claims, wherein a chain transfer agent is used in the polymerization of the first stage.

**11.** The polymer dispersion according to any of the preceding claims, wherein the weight ratio of the amount of the monomers used in the first stage to the amount of the monomers used in the second stage is from 5:95 to 50:50.

**12.** The polymer dispersion according to any of the preceding claims, wherein the polymerization of the first stage takes place in the presence of a seed latex.

**13.** The polymer dispersion according to any of the preceding claims, wherein the monomers used in the second stage comprise not more than 1 part by weight of monomers with acid groups, based on 100 parts by weight of monomers of the polymer (A), or comprise no monomers with acid groups.

**14.** The polymer dispersion according to any of the preceding claims, wherein the molar ratio of acid groups in the polymer A to oxazoline groups in the polymer B is from 20:1 to 1:1.

**15.** The polymer dispersion according to any of the preceding claims, wherein the weight ratio of polymer A to polymer

B is from 5:1 to 50:1.

16. The polymer dispersion according to any of the preceding claims, wherein the monomer (b2) is selected from the group consisting of the salts of ethylenically unsaturated sulfonic acids, acrylamide, methacrylamide, the esters of unsaturated carboxylic acids with polyethylene glycol, the esters of unsaturated carboxylic acids with alkylpolyethylene glycol, or mixtures of these monomers.

17. A process for preparing an aqueous polymer dispersion for composite film lamination, in which a polymer (A) dispersed in aqueous phase is prepared by radical emulsion polymerization,

- where initially in a first stage in aqueous medium a first polymer dispersed in water is prepared by radical emulsion polymerization, the first polymer being prepared from a first composition comprising ethylenically unsaturated radically polymerizable monomers, where the monomers of the first stage comprise at least one monomer having at least one acid group in an amount of at least 0.1 part by weight, based on 100 parts by weight of the total amount of monomers of the first and second stages, and
- subsequently in a second stage a polymer dispersion is prepared in aqueous medium and in the presence of the first polymer by radical emulsion polymerization of a second composition comprising ethylenically unsaturated, radically polymerizable monomers, different from the first composition,
- where in total less than 0.5 part by weight of emulsifier, based on 100 parts by weight of monomers of the polymer (A), or no emulsifier is used, and
- where the glass transition temperature of the polymer (A) prepared is less than 0°C; and

where the dispersed polymer (A) is mixed with a polymer (B) soluble in the polymer dispersion, the polymer (B) being prepared by radical polymerization of

(b1) at least one ethylenically unsaturated, radically polymerizable monomer having at least one oxazoline group, and
(b2) at least 5% by weight, based on the total monomer amount of the polymer B, of at least one hydrophilic, ethylenically unsaturated, radically polymerizable monomer without oxazoline group and with a water solubility of at least 100 g/l at 25°C,

and optionally further monomers (b3).

18. The use of the aqueous polymer dispersion according to any of claims 1 to 16 or of the aqueous polymer dispersion prepared according to the preceding claim as a laminating adhesive, for producing laminating adhesives, or in the production of composite films.

19. A composite film which comprises a first film and at least one second film, which are bonded to one another using an adhesive comprising the aqueous polymer dispersion according to any of claims 1 to 16 or an aqueous polymer dispersion prepared according to claim 17.

20. A process for producing composite films, which comprises providing an aqueous polymer dispersion according to any of claims 1 to 16 or an aqueous polymer dispersion prepared according to claim 17 and bonding at least two films with one another using the aqueous polymer dispersion.

**Revendications**

1. Dispersion aqueuse de polymères pour le contrecollage de feuilles composites, contenant

(A) au moins un polymère dispersé A, préparé par polymérisation radicalaire en émulsion,

- un premier polymère dispersé dans l'eau étant d'abord préparé dans une première étape dans un milieu aqueux par polymérisation radicalaire en émulsion, le premier polymère étant préparé à partir d'une première composition contenant des monomères éthyléniquement insaturés, polymérisables par voie radicalaire, les monomères de la première étape comprenant au moins un monomère présentant au moins un groupe acide en une quantité d'au moins 0,1% en poids, par rapport à 100% en poids de la quantité totale de monomères de la première et de la deuxième étape et

- ensuite, dans une deuxième étape, une dispersion de polymères étant préparée en milieu aqueux et en présence du premier polymère par polymérisation radicalaire en émulsion d'une deuxième composition, différente de la première composition, contenant des monomères éthyléniquement insaturés, polymérisables par voie radicalaire,
- au total moins de 0,5 partie en poids d'émulsifiant, par rapport à 100% en poids de monomères du polymère A, étant utilisée ou aucun émulsifiant n'étant utilisé, et
- la température de transition vitreuse du polymère A préparé étant inférieure à 0°C ; et

(B) au moins un polymère B dissous dans la dispersion aqueuse de polymères, préparé par polymérisation radicalaire de

(b1) au moins un monomère éthyléniquement insaturé, polymérisable par voie radicalaire présentant au moins un groupe oxazoline, et
(b2) au moins 5% en poids, par rapport à la quantité totale de monomères du polymère B, d'au moins un monomère hydrophile, éthyléniquement insaturé, polymérisable par voie radicalaire sans groupe oxazoline et présentant une solubilité dans l'eau d'au moins 100 g/l à 25°C,

et éventuellement d'autres monomères (b3).

2. Dispersion de polymères selon la revendication précédente, **caractérisée en ce que** la polymérisation de la première étape a lieu à un pH inférieur à 5 et les groupes acides du premier polymère sont neutralisés avant ou pendant la polymérisation de la deuxième étape, à l'aide d'une solution aqueuse d'ammoniaque, jusqu'à ce que le pH de la dispersion de polymères à la fin de la deuxième étape soit supérieur à 5.

3. Dispersion de polymères selon l'une quelconque des revendications précédentes, **caractérisée en ce que** les monomères contenant des groupes oxazoline (b1) dans le polymère (B) sont utilisés en une quantité de 10 à 60 parties en poids par rapport à 100 parties en poids de monomères du polymère (B).

4. Dispersion de polymères selon l'une quelconque des revendications précédentes, **caractérisée en ce que** le monomère contenant des groupes oxazoline est choisi parmi les composés de formule

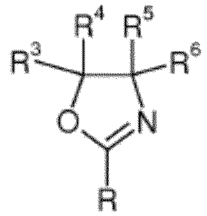

dans laquelle les radicaux présentent les significations suivantes :

R représente un radical $C_{2-20}$-alcényle comprenant au moins un groupe éthyléniquement insaturé ;
$R^3$, $R^4$, $R^5$, $R^6$ sont choisis, indépendamment les uns des autres, parmi H, halogène, $C_{1-20}$-alkyle, $C_{2-20}$-alcényle, $C_{6-20}$-aryle, $C_{7-32}$-arylalkyle, $C_{1-20}$-hydroxyalkyle, $C_{1-20}$-aminoalkyle et $C_{1-20}$-halogénoalkyle.

5. Dispersion de polymères selon l'une quelconque des revendications précédentes, **caractérisée en ce que** les monomères contenant des groupes oxazoline sont choisis parmi la 2-vinyl-2-oxazoline, la 2-vinyl-4-méthyl-2-oxazoline, la 2-vinyl-5-méthyl-2-oxazoline, la 2-vinyl-4-éthyl-2-oxazoline, la 2-vinyl-4,4-diméthyl-2-oxazoline, la 2-vinyl-5,5-diméthyl-2-oxazoline, la 2-vinyl-4,4,5,5-tétraméthyl-2-oxazoline, la 2-isopropényl-2-oxazoline, la 2-isopropényl-4-méthyl-2-oxazoline, la 2-isopropényl-5-méthyl-2-oxazoline, la 2-isopropényl-4-éthyl-2-oxazoline, la 2-isopropényl-5-éthyl-2-oxazoline, la 2-isopropényl-4,4-diméthyl-2-oxazoline, la 2-isopropényl-5,5-diméthyl-2-oxazoline et la 2-isopropényl-4,4,5,5-tétraméthyl-2-oxazoline.

6. Dispersion de polymères selon l'une quelconque des revendications précédentes, **caractérisée en ce que**, dans la première étape, des monomères présentant des groupes acides sont copolymérisés avec des monomères sans groupe acide, le rapport pondéral de monomères présentant des groupes acides aux monomères sans groupe acide se situant dans la plage de 1:99 à 20:80.

7. Dispersion de polymères selon l'une quelconque des revendications précédentes, **caractérisée en ce que** les monomères présentant au moins un groupe acide utilisés dans la première étape sont choisis dans le groupe constitué par l'acide acrylique, l'acide méthacrylique, l'acide itaconique, l'acide maléique, l'acide fumarique, l'acide crotonique, l'acide vinylacétique, l'acide vinyllactique et les mélanges de ces monomères ; et les monomères sans groupe acide utilisés dans la première étape sont choisis dans le groupe constitué par les acrylates de $C_1$-$C_{10}$-alkyle et les méthacrylates de $C_1$-$C_{10}$-alkyle et les mélanges de ces monomères.

8. Dispersion de polymères selon l'une quelconque des revendications précédentes, **caractérisée en ce qu'**au moins 60% en poids des monomères utilisés dans la deuxième étape sont choisis dans le groupe constitué par les acrylates de $C_1$-$C_{20}$-alkyle, les méthacrylates de $C_1$-$C_{20}$-alkyle, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons et les mélanges de ces monomères.

9. Dispersion de polymères selon l'une quelconque des revendications précédentes, **caractérisée en ce que** les polymères de la première et de la deuxième étape, à l'exception des monomères acides, sont formés exclusivement à partir de dérivés de l'acide (méth)acrylique.

10. Dispersion de polymères selon l'une quelconque des revendications précédentes, **caractérisée en ce qu'**un agent de régulation du poids moléculaire est utilisé lors de la polymérisation de la première étape.

11. Dispersion de polymères selon l'une quelconque des revendications précédentes, **caractérisée en ce que** le rapport pondéral de la quantité des monomères utilisés dans la première étape à la quantité de monomères utilisés dans la deuxième étape est de 5:95 à 50:50.

12. Dispersion de polymères selon l'une quelconque des revendications précédentes, **caractérisée en ce que** la polymérisation de la première étape a lieu en présence d'un latex d'ensemencement.

13. Dispersion de polymères selon l'une quelconque des revendications précédentes, **caractérisée en ce que** les monomères utilisés dans la deuxième étape comprennent au maximum 1 partie en poids de monomères présentant des groupes acides, par rapport à 100 parties en poids de monomères du polymère (A), ou ne comprennent pas de monomères présentant des groupes acides.

14. Dispersion de polymères selon l'une quelconque des revendications précédentes, **caractérisée en ce que** le rapport molaire des groupes acides du polymère A aux groupes oxazoline du polymère B est de 20:1 à 1:1.

15. Dispersion de polymères selon l'une quelconque des revendications précédentes, **caractérisée en ce que** le rapport pondéral du polymère A au polymère B est de 5:1 à 50:1.

16. Dispersion de polymères selon l'une quelconque des revendications précédentes, **caractérisée en ce que** le monomère (b2) est choisi dans le groupe constitué par les sels d'acides sulfoniques éthyléniquement insaturés, l'acrylamide, le méthacrylamide, les esters d'acides carboxyliques insaturés avec du polyéthylèneglycol, les esters d'acides carboxyliques insaturés avec un alkylpolyéthylèneglycol ou les mélanges de ces monomères.

17. Procédé pour la préparation d'une dispersion aqueuse de polymères pour le contrecollage de feuilles composites, un polymère (A) dispersé en phase aqueuse étant préparé par polymérisation radicalaire en émulsion

- un premier polymère dispersé dans l'eau étant d'abord préparé dans une première étape dans un milieu aqueux par polymérisation radicalaire en émulsion, le premier polymère étant préparé à partir d'une première composition contenant des monomères éthyléniquement insaturés, polymérisables par voie radicalaire, les monomères de la première étape comprenant au moins un monomère présentant au moins un groupe acide en une quantité d'au moins 0,1% en poids, par rapport à 100% en poids de la quantité totale de monomères de la première et de la deuxième étape et
- ensuite, dans une deuxième étape, une dispersion de polymères étant préparée en milieu aqueux et en présence du premier polymère par polymérisation radicalaire en émulsion d'une deuxième composition, différente de la première composition, contenant des monomères éthyléniquement insaturés, polymérisables par voie radicalaire,

- au total moins de 0,5 partie en poids d'émulsifiant, par rapport à 100% en poids de monomères du polymère (A), étant utilisée ou aucun émulsifiant n'étant utilisé, et
- la température de transition vitreuse du polymère (A) préparé étant inférieure à 0°C ; et

le polymère (A) dispersé étant mélangé avec un polymère (B) soluble dans la dispersion de polymères et le polymère (B) étant préparé par polymérisation radicalaire de

(b1) au moins un monomère éthyléniquement insaturé, polymérisable par voie radicalaire présentant au moins un groupe oxazoline, et
(b2) au moins 5% en poids, par rapport à la quantité totale de monomères du polymère B, d'au moins un monomère hydrophile, éthyléniquement insaturé, polymérisable par voie radicalaire sans groupe oxazoline et présentant une solubilité dans l'eau d'au moins 100 g/l à 25°C,

et éventuellement d'autres monomères (b3).

**18.** Utilisation de la dispersion aqueuse de polymères selon l'une quelconque des revendications 1 à 16 ou de la dispersion aqueuse de polymères préparée selon la revendication précédente comme adhésif de contrecollage, pour la préparation d'adhésifs de contrecollage ou lors de la fabrication de films composites.

**19.** Film composite qui présente une première et au moins une deuxième feuille, qui sont collées l'une à l'autre avec utilisation d'un adhésif contenant la dispersion aqueuse de polymères selon l'une quelconque des revendications 1 à 16 ou une dispersion aqueuse de polymères préparée selon la revendication 17.

**20.** Procédé pour la fabrication de feuilles composites, **caractérisé en ce qu'**une dispersion aqueuse de polymères selon l'une quelconque des revendications 1 à 16 ou une dispersion aqueuse de polymères préparée selon la revendication 17 est mise à disposition et au moins deux feuilles sont collées l'une à l'autre avec utilisation de la dispersion aqueuse de polymères.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0176609 A
- US 4474923 A
- EP 0846731 A
- WO 2011154920 A
- WO 2014187692 A
- US 5300602 A


### In der Beschreibung aufgeführte Nicht-Patentliteratur


- **T.G. FOX.** *Bull. Am. Phys. Soc.,* 1956, 123
- Ullmann's Encyclopädie der technischen Chemie. Verlag Chemie, 1980, vol. 19, 18
- Ullmann's Encyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989